# EUROPÄISCHE PATENTSCHRIFT

(11) **EP 2 977 925 B1**
(45) Veröffentlichungstag und Bekanntmachung des Hinweises auf die Patenterteilung: **13.02.2019**
(21) Anmeldenummer: 15175846.3
(22) Anmeldetag: 08.07.2015
(51) Int. Cl.: G06F 21/32, G07C 9/00, G06K 9/03

(54) **MOBILES TERMINAL ZUM ERFASSEN BIOMETRISCHER DATEN**
MOBILE TERMINAL FOR DETERMINING BIOMETRIC DATA
TERMINAL MOBILE DESTINE A ENREGISTRER DES DONNEES BIOMETRIQUES

(30) Priorität: 10.07.2014 DE 102014109682
(43) Veröffentlichungstag der Anmeldung: 27.01.2016
(60) Teilanmeldung: 18210476.0
(73) Patentinhaber: Bundesdruckerei GmbH, 10969 Berlin (DE)
(72) Erfinder: WOLF, Dr., Andreas, 07743 Jena (DE); KÜTER, Dr., Joachim, 10245 Berlin (DE)
(74) Vertreter: Richardt Patentanwälte PartG mbB

(56) Entgegenhaltungen:
- US-A1- 2012 293 642
- US-B2- 8 296 573
- Speed Identity: "Speed Capture G3", , 1. Januar 2011 (2011-01-01), XP055237148, Gefunden im Internet: URL:www.speed-identity.com/Files.aspx?f_id =96619 [gefunden am 2015-12-17]
- Inkript: "PRIME MOBILE ENROLLMENT KITS", , 1. März 2014 (2014-03-01), XP055237150, Gefunden im Internet: URL:http://www.inkript.com/Enrollment.aspx ?pageid=44 [gefunden am 2015-12-17] & Inkript: "PRIME ENROLLMENT SOFTWARE", , 1. März 2014 (2014-03-01), XP055237152, Gefunden im Internet: URL:http://www.inkript.com/Enrollment.aspx ?pageid=44 [gefunden am 2015-12-17]
- Stefan Pahmeier: "Designing a self-service terminal for capturing biometric data for the German Identity Card and the Electronic Passport", , 1. September 2011 (2011-09-01), XP55237157, Gefunden im Internet: URL:http://subs.emis.de/LNI/Proceedings/Pr oceedings191/151.pdf [gefunden am 2015-12-17]
- Vision Box: "vb e-pass portable Vision-Box", , 14. Januar 2013 (2013-01-14), XP55237164, Gefunden im Internet: URL:https://web.archive.org/web/2013011408 1022/http://www.vision-box.com/solutions/m obile-vbepass/ [gefunden am 2015-12-17]

## Beschreibung

Die Erfindung betrifft ein mobiles Terminal zum Erfassen von biometrischen Daten eines Nutzers sowie ein entsprechendes Verfahren.

Aus dem Stand der Technik sind verschiedene Verfahren zur Erfassung biometrischer Daten eines Benutzers bekannt, z.B. zum Zwecke der Ausstellung eines elektronischen Passes oder Firmenausweises welche die biometrischen Daten enthalten sollen. Hierzu werden von einer Behörde oder einer das Identitätsdokument ausstellenden Organisation entsprechende Gerätschaften in den Räumlichkeiten der Behörde bzw. der ausstellenden Organisation zur Verfügung gestellt, die von speziell geschultem Personal bedient werden.

US-Patentanmeldung US20110311111 A1 beschreibt ein System zur Selbsterfassung biometrischer Daten. Das System beinhaltet einen Prozessor, einen Scanner, einen Drucker und eine sichere Datenbank. Der Prozessor aktiviert den Scanner um diesen zur Erfassung eines biometrischen, digitalen Bildes zu veranlassen. Außerdem wird ein Scorewert berechnet und angezeigt, der die Qualität von Bereichen des Bildes wiedergibt.

EP-Patentanmeldung EP2381427 A1 beschreibt ein Verfahren zur automatischen Erneuerung eines Personalausweises. Zunächst wird ein aktueller Ausweis mit aktuellen Identifizierungsdaten registriert. Außerdem werden Daten bezüglich einer neuen Identifikation einer Person registriert. Mindestens ein Parameter der neuen Identifizierung wird mit zumindest einem Parameter des aktuellen Identifikationsdokumentes verglichen, um dadurch zu ermitteln, ob die beiden Identifizierungsdaten zur gleichen Person gehören. Falls das der Fall ist, wird die neue Identifikation an eine Stelle zur Ausstellung eines neuen Ausweisdokuments übermittelt.

US Patent Dokument US8036431 B1 beschreibt ein tragbares Gerät zur dynamischen Erfassung von Fingerabdrücken, Gesichtsbildern sowie Bildern von einem Tatort, die an ein zentrales Host-System zur Identitätsprüfung übermittelt werden.

US-Patentanmeldung US20130208103 A1 beschreibt eine elektronische Anzeige zur Erleichterung der Authentifikation. Die elektronische Anzeige beinhaltet eine Kamera, ein Mikrofon, einen Fingerabdrucksensor, ein Kartenlesegerät, einen Touchscreen und eine Kommunikationsschnittstelle um biometrische Daten und andere Identifikationsdaten automatisch zu erfassen. Die Erfassung erfolgt, um einen Nutzer, der Zugriff auf das Anzeigegerät verlangt, zu authentifizieren.

Der Erfindung liegt demgegenüber die Aufgabe zugrunde, ein verbessertes Verfahren und ein verbessertes Terminal zur Erfassung biometrischer Daten bereitzustellen.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

Ein "Sicherheitsdokument" ist ein Dokument, das ein oder mehrere Sicherheitsmerkmale umfasst, die ein Duplizieren und/oder Verfälschen des Sicherheitsdokuments erschweren oder unmöglich machen sollen, und die in dem Sicherheitsdokument gespeichert, eingeprägt oder auf sonstige Art physisch mit dem Dokument verbunden sind. Zu den Informationen, die in dem Sicherheitsdokument gespeichert sind, können z.B. folgende Daten gehören: ein Name, ein Geburtsdatum, ein Geburtsort, ein Wohnort, eine Nationalität, eine Körpergröße, eine Geschlechtsbezeichnung, und biometrische Daten der Person, welcher das Sicherheitsdokument zugeordnet ist. Zu den biometrischen Daten können beispielsweise ein Passbild, Fingerabdruckdaten, Irisinformationen, Gesichtsinformationen usw. gehören. Zusätzlich zu diesen personenbezogenen Daten kann ein Sicherheitsdokument auch Informationen, die das Sicherheitsdokument selbst identifizieren, beispielsweise eine Ausweisnummer, und charakteristische Sicherheitsmerkmale umfassen. Ein Sicherheitsdokument kann z.B. ein Zahlungsmittel, z.B. eine Kreditkarte, oder ein Identitätsdokument sein. Bei dem Identitätsdokument kann es sich beispielsweise um einen Reisepass, einen Personalausweis, eine Identitätskarte, einen Führerschein, einen Werkausweis usw. handeln.

Ein "Terminal" ist ein Benutzerendgerät zum Empfang und zur Anzeige von Daten. Ein Terminal kann eine kontaktlose oder kontaktbehaftete Schnittstelle zum Datenaustausch mit einem Sicherheitsdokument enthalten.

Unter einer "Authentifizierung einer ersten Entität gegenüber einer zweiten Entität" wird die Erbringung eines Nachweises einer behaupteten Eigenschaft der ersten Entität gegenüber der zweiten Entität verstanden. Bei der ersten und/oder zweiten Identität kann es sich beispielsweise um einen Menschen, ein Gerät, ein Dokument oder ein Datenobjekt handeln. Der Begriff "Authentifizierung" soll hier, entsprechend der Gepflogenheit im englischen Sprachraum, sowohl die Erbringung des Nachweises durch die erste Entität als auch die Prüfung dieses Nachweises durch die zweite Entität umfassen. Datenwerte, die als ein solcher Nachweis im Zuge einer Authentifizierung dienen, werden im Folgenden als "Authentifizierungsdaten" bezeichnet.

"Biometrische Daten" sind Daten, die mittels automatischer Erkennungsverfahren zur Personenidentifikation verwendet werden können. Biometrische Daten können zum Beispiel folgende Daten einer Person beinhalten: Körpergröße, Augenfarbe, Fingerlinienbild, Gesichtsgeometrie, Musterung der Iris oder der Retina, Handlinienstruktur, Handvenenmuster, Nagelbettmuster, Zahnabdruck, Stimmprofil, Unterschrift und DNA (genetischer Fingerabdruck).

Ein "Berechtigungsnachweis" weist eine Entität als berechtigt aus, eine bestimmte Funktion durchzuführen. Ein Berechtigungsnachweis ist beispielsweise ein Satz aus ein oder mehreren Datenwerten, welcher festgelegt, welche personenbezogenen Daten, z.B. biometrischen Daten, von einem mobilen Terminal von einem Nutzer erfasst werden dürfen. Darüber hinaus kann ein Berechtigungsnachweis auch festlegen, welche Daten aus einem Sicherheitsdokument, z.B. einem elektronischen Personalausweis, ausgelesen werden dürfen, z.B. damit sich der Inhaber des Personalauseises mittels der eID Funktion des Ausweises gegenüber einem Dienst oder einem Terminal authentifizieren kann. Ein Berechtigungsnachweis kann also eine gegenseitige Authentifizierung von Nutzer und Dienstanbieter oder Nutzer und Terminal ermöglichen.
Ein Berechtigungsnachweis kann als "Berechtigungszertifikat" ausgebildet sein oder dieses umfassen. Ein Berechtigungszertifikat ist eine elektronische Bescheinigung, z.B. in Form einer Datei, die vom Chip des Sicherheitsdokuments (z.B. Personalausweis) vor jedem Lesevorgang geprüft wird. Es kann festlegen, welche personen- und ausweisbezogenen Daten der Anbieter eines Dienstes bzw. ein Terminal dieses Anbieters aus dem Personalausweis des Nutzers auslesen darf. Um ein Berechtigungszertifikat erwerben zu können, kann z.B. in Deutschland ein Dienstanbieter, z.B. ein Aussteller eines personalisierten Sicherheitsdokuments, eine Berechtigung der staatlichen Vergabestelle für Berechtigungszertifikate (VfB) im Bundesverwaltungsamt benötigen. Dienstanbieter, die die Online-Ausweisfunktion (eID-Funktion) des neuen Personalausweises nutzen wollen, können sich mit einem Berechtigungszertifikat vor dem Nutzer ausweisen.

In einem Aspekt betrifft die Erfindung ein mobiles Terminal zum Erfassen von biometrischen Daten eines Nutzers. Das Terminal umfasst einen Datenspeicher, ein Authentifizierungsmodul und einen Sensor zur Erfassung biometrischer Daten des Nutzers. Der Datenspeicher enthält einen Berechtigungsnachweis der dem Nutzer spezifisch zugeordnet ist. Der Berechtigungsnachweis weist das mobile Terminal als berechtigt aus, die biometrischen Daten des Nutzers zu erfassen und zu speichern.

Das Authentifizierungsmodul ist dazu konfiguriert, den Nutzer gegenüber dem mobilen Terminal mittels dem Nutzer zugeordneter Authentifizierungsdaten zu authentifizieren. Außerdem ist das Authentifizierungsmodul dazu konfiguriert, das mobile Terminal mittels des gespeicherten Berechtigungsnachweises gegenüber dem Nutzer zu authentifizieren. Das Authentifizierungsmodul ist ferner zur Authentifizierung eines Operators gegenüber dem mobilen Terminal mittels weiterer Authentifizierungsdaten, die dem Operator zugeordnet sind, konfiguriert.

Außerdem beinhaltet das Terminal eine Kontrolleinheit und eine Prüfeinheit. Die Kontrolleinheit ist dazu konfiguriert, nur bei gegenseitiger erfolgreicher Authentifizierung des Nutzers und des mobilen Terminals die biometrischen Daten des Nutzers mittels des Sensors automatisch oder semi-automatisch zu erfassen.
Die Prüfeinheit ist zur automatischen Prüfung der Echtheit der erfassten biometrischen Daten konfiguriert.

Die Kontrolleinheit ist so konfiguriert, dass sie die erfassten biometrischen Daten nur dann in dem Datenspeicher in geschützter Form speichert, wenn die erfassten biometrischen Daten gemäß der Prüfung durch die Prüfeinheit echt sind. Die Kontrolleinheit ist ferner dazu konfiguriert, nur im Falle einer erfolgreichen Authentifizierung des Operators gegenüber dem Terminal ein Auslesen der geschützt gespeicherten biometrischen Daten zu ermöglichen um die ausgelesenen biometrischen Daten an ein Sicherheitsdokument zu übertragen.

Die Verwendung eines solchen mobilen Terminals kann vorteilhaft sein, da die Vertrauenswürdigkeit der so gewonnenen biometrischen Daten sehr hoch sein kann, und dies, ohne eine für beide Seiten teure Enrollment-Infrastruktur bereitstellen zu müssen: es ist weder erforderlich, dass Behörden in Ihren Räumlichkeiten entsprechende Enrollment-Terminals aufstellen und eigenes Personal in der oft komplexen Bedienung der teuren und kompliziert zu bedienenden Geräte schulen, noch muss der Nutzer, dessen biometrische Daten erfasst werden sollen, eigens eine Reise in Kauf nehmen um diese Räumlichkeiten der Behörde aufzusuchen. Es geht also auf beiden Seiten keine Zeit für Terminvereinbarung und Anfahrt verloren. Gerade in ländlichen Gebieten oder Ländern mit schlecht entwickelter Infrastruktur und/oder langen Wegen bis zur nächsten Behördenstelle kann dies für den Nutzer sehr vorteilhaft sein, und auch insbesondere für kleinere Zweigstellen von Behörden kann es vorteilhaft sein, die für die Erfassung von biometrischer Daten mittels Terminals nötige technische Infrastruktur bzw. das erforderliche technische Know-how nicht vorhalten zu müssen. Besonders vorteilhaft kann der Einsatz des beschriebenen mobilen Terminals in Situationen sein, in welchen der Nutzer immobil ist, z.B. aus gesundheitlichen Gründen, aus Altersgründen oder wegen Gefängnisaufenthalts. Falls der Nutzer im Ausland tätig ist kann eine Anreise ins Inland nur zum Zwecke der sicheren und - aus der Perspektive der Behörde - vertrauenswürdigen Erfassung der biometrischen Daten einen unverhältnismäßig hohen Aufwand bedeuten.

Nach manchen Ausführungsformen ist das mobile Terminal so ausgebildet, dass es den Berechtigungsnachweis evaluiert und nur diejenigen Sensoren zur Erfassung biometrischer Daten aktiviert und verwendet, für deren Erhebung das Terminal gemäß der Spezifikation des Berechtigungsnachweises auch berechtigt ist.

Nach manchen Ausführungsformen erfolgt die Authentifizierung des Terminals gegenüber dem Nutzer dadurch, dass im Zuge der Personalisierung des Terminals ein Berechtigungszertifikat in dem Speicher des mobilen Terminals gespeichert wird. Das Berechtigungszertifikat kann spezifizieren, dass ein Terminal mit diesem Berechtigungszertifikat berechtigt ist, beschreibende Daten des Nutzers aus anderen, noch gültigen Identitätsdokumenten des Nutzers auszulesen und/oder dazu berechtigt ist, auch biometrische Daten bestimmten Typs auszulesen oder neu zu erfassen und zu speichern. Unter einer Personalisierung des Terminals wird hier die Vorbereitung des Terminals zum Versand an diesen speziellen Nutzer zur selektiven Erfassung biometrischer Daten nur von diesem Nutzer verstanden. Das Berechtigungszertifikat kann von einem Chip des noch gültigen Personalausweises oder Reisepasses des Nutzers mittels eines eID-Servers geprüft werden. Das mobile Terminal kann so konfiguriert sein, dass das Verfahren zur Erfassung der biometrischen Daten nur dann fortgesetzt und diejenigen Sensoren des Terminals, die der Erfassung der in dem Zertifikat spezifizierten biometrischen Daten dienen, nur dann aktiviert werden, falls sich das Terminal gegenüber dem Nutzer als berechtigt ausweisen ("authentifizieren") konnte.

Nach Ausführungsformen erfolgt die Authentifizierung des Nutzers gegenüber dem Terminal mit Hilfe eines anderen, noch gültigen Sicherheitsdokuments, z.B. mittels eines noch gültigen Personalausweises. Dies kann beispielsweise dadurch geschehen, dass bei der Personalisierung des mobilen Terminals persönliche Daten des Nutzers als Referenzwerte in dem Terminal von einem Operator bzw. Dokumentenausstellers gespeichert werden. Die Referenzwerte können z.B. Name und Anschrift des Nutzers beinhalten, der die Zusendung des mobilen Terminals zum Zwecke der (Neu)-Ausstellung eines Sicherheitsdokuments vom Dokumentenaussteller beantragt hat. Nach einer Authentifizierung des Terminals gegenüber dem noch gültigen Sicherheitsdokument des Nutzers kann das Terminal persönliche Daten des Nutzers aus diesem Sicherheitsdokument auslesen und mit den gespeicherten Referenzwerten vergleichen. Bei Übereinstimmung der verglichenen Daten (z.B. Adresse und Name des Nutzers) hat sich der Nutzer erfolgreich gegenüber dem Terminal authentifiziert und nachgewiesen, dass die Person, die das personalisierte Terminal in Empfang genommen hat auch die Person ist, für welche das Terminal personalisiert wurde. Es ist auch möglich, dass im Zuge der Personalisierung ein beliebiger Referenzwert in dem mobilen Terminal gespeichert wird, z.B. eine Zufallszahl. Dieser beliebige Referenzwert wird dem Nutzer auf getrenntem Wege, zum Beispiel per Brief, per SMS, per verschlüsselter Mail oder dergleichen übermittelt. Der Nutzer kann bei Inbetriebnahme des mobilen Terminals diesen Referenzwert eingeben, z.B. über eine Tastatur des Terminals, um sich gegenüber dem Terminal zu authentifizieren.

Der Umstand, dass das mobile Terminal das besagte Authentifizierungsmodul umfassen kann, kann vorteilhaft sein, da dadurch verhindert werden könnte, dass ein Dritter dem Nutzer ein manipuliertes Terminal "unterschiebt" um die biometrischen Daten des Nutzers auszuspähen. Das mobile Terminal kann die biometrischen Daten nur dann erfassen, speichern und nach Rücksendung an die Behörde der Behörde zur Verfügung stellen, wenn Nutzer und Terminal sich erfolgreich gegenseitig authentifiziert haben. Die geschützte, z.B. verschlüsselte Speicherung der biometrischen Daten in dem Terminal könnte die Sicherheit der Daten weiter erhöhen, etwa, um die Daten vor Zugriff Dritter zu schützten falls das mobile Terminal auf der Post bei der Rücksendung verloren gehen sollte. Durch diese Maßnahmen kann der Nutzer also auf den Schutz seiner biometrischen Daten vertrauen auch wenn das Terminal auf dem normalen Postweg transportiert wird, und darauf vertrauen dass das Terminal wirklich von dem vertrauenswürdigen Dokumentenaussteller stammt und auch nur von diesem die biometrischen Daten ausgelesen werden können. Andererseits kann aber auch sichergestellt werden, dass sich die Behörde auf die richtige Zuordnung und die Echtheit der erfassten biometrischen Daten verlassen kann. Dies kann dadurch sichergestellt werden, dass sich auch der Nutzer gegenüber dem Terminal vor der Datenerfassung authentifizieren muss und durch die Prüfeinheit, welche je nach Art der erfassten biometrischen Daten (Fingerabdruck, Gesichtsbild, Handvene, etc.) auch ein geeignetes Prüfverfahren zum Schutz vor "Presentation Attacs" implementiert. Das Prüfverfahren könnte z.B. eine Prüfung beinhalten, ob das erfasste Gesichtsbild nicht von einem Foto stammt, das vor den Sensor gehalten wurde, oder ob die Fingerabdruckdaten nicht von einer Fingerattrappe aus Alginat stammen. Somit könnte auch die Behörde, die das mobile Terminal bereitstellt, sichergehen, dass die erfassten biometrischen Daten von der Person stammen, die das Terminal beantragt hat, ohne dass hierfür eigens geschultes Personal bei der Erfassung der Daten anwesend sein muss (Schutz vor "Presentation Attacks").

Nach Ausführungsformen besteht der Sensor aus einem Kamerasystem zum Erfassen von Bilddaten als den biometrischen Daten. Die Bilddaten können z.B. Bilddaten von dem Gesicht des Nutzers und/oder Bilddaten von einer Iris des Nutzers sein. Das Kamerasystem kann aus einer Einzelkamera oder mehreren Kameras bestehen, z.B. aus einer Kamera für Weißlichtbilder z.B. für Gesichtsbilder und aus einer Kamera für Bilder, die im nahen Infrarotbereich (NIR) aufgenommen werden, z.B. Irisbilder. Zusätzlich oder alternativ dazu kann der Sensor aus einem Fingerabdrucksensor bestehen oder diesen umfassen. Der Fingerabdrucksensor dient zum Erfassen von Fingerabdruckdaten des Nutzers als den biometrischen Daten. Zusätzlich oder alternativ dazu kann der Sensor aus einem Sensor für Handvenenmuster und/oder einem Retinamuster und/oder einem Nagelbettmuster und/oder einem Unterschriftenpad und/oder einem Mikrofon zur Erfassung eines Stimmprofils und/oder anderen Arten von biometrischen Sensoren bestehen oder diesen umfassen. Auch Kombinationen aus einem oder mehreren der hier genannten Sensoren sind möglich. Ein Sensor für Handvenenmuster kann z.B. eine Infrarot-Kamera sein. Entsprechende Verfahren zur Datenerfassung sind beispielsweise in folgenden koreanischen Patentanmeldungen beschrieben: KR102003020152A: "SYSTEM AND METHOD FOR RECOGNIZING BLOOD VESSEL PATTERN ON BACK OF HAND FOR IDENTIFYING PERSON", KR102003002954A: "DEVICE AND METHOD FOR RECOGNIZING BLOOD VESSEL PATTERN ON BACK OF HAND FOR PERSONAL IDENTIFICATION" und KR102002092522A: "METHOD AND APPARATUS FOR IDENTIFYING PERSON BY USING FINGERPRINT OF FINGER JOINT".

Dies kann vorteilhaft sein, da jedes dieser biometrischen Merkmale und insbesondere eine Kombination mehrerer der genannten biometrischen Merkmale eine sehr sichere und verlässliche Identifikation der Person, von welchen die besagten biometrischen Merkmale stammen, erlauben.

Nach Ausführungsformen umfasst das mobile Terminal ferner ein Qualitäts-Prüfmodul zur automatischen Prüfung der Qualität der erfassten biometrischen Daten. Die Speicherung der erfassten biometrischen Daten in dem mobilen Terminal erfolgt nur dann, wenn die erfassten biometrischen Daten zudem vordefinierte Qualitätsmindestanforderungen erfüllen. Dies kann vorteilhaft sein, da dadurch verhindert werden kann, dass, z.B. aufgrund eines Bedienfehlers, biometrische Daten erfasst und mitsamt des mobilen Terminals an die Behörde zurückgesendet werden, deren Qualität nicht ausreicht um z.B. ein Identifikationsdokument damit auszustatten. Ein teures und zeitraubendes erneutes Beantragen, Versenden und Zurücksenden des mobilen Terminals könnte dadurch vermieden werden. Da die Prüfeinheit die Prüfung vornimmt und vorzugsweise eine Warnmeldung ausgibt, die dem Nutzer ermöglicht, einen Bedienfehler zu korrigieren, kann das bisherige Erfordernis, dass technisch geschultes Personal beim Vorgang des Enrollments anwesend ist, entfallen.

Die Qualitätsprüfung kann zum Beispiel eine Prüfung von Bilddaten daraufhin beinhalten, ob der Hintergrund monoton ist, ob das Gesicht ausreichend hell und gleichmäßig beleuchtet ist, ob das Gesicht auf dem Bild in hinreichender Größe und Auflösung erscheint, ob Fingerlinien einen hinreichenden Kontrast aufweisen etc. Die Qualitätsprüfung kann auch beinhalten, dass das Terminal aus einer Vielzahl an erfassten Aufnahmen biometrischer Daten, z.B. aus einer Vielzahl von Gesichtsbildern oder Fingerabdruckscans, ein oder mehrere Aufnahmen auswählt und selektiv nur die ausgewählten Aufnahmen, die die höchste Qualität aufweisen und die Qualitätsmindestanforderungen erfüllen, speichert. Die Qualitätsbewertung der biometrischen Daten des Nutzers kann zum Beispiel nach einem der in der deutschen Patentanmeldung DE 10 2006 005 617 ("Verfahren zur Bewertung der Qualität eines Bildes [...]") offenbarten Verfahren durchgeführt werden. Hierbei können unter anderem folgende Parameter evaluiert werden: Dateigröße, Farbraum, Farbtiefe, Helligkeit, Kontrast, Dynamik, Schärfe, Bildhöhe, Bildweite, Bildseitenverhältnis, Rauschen, Anzahl der auf dem Bild gezeigten Objekte, Anzahl der Augen, Augendistanz, Kopfposition, Verhältnis Kopfbreite zu Bildbreite oder Bildhöhe, etc.

Nach Ausführungsformen kann das Qualitätsmodul mit einer Beleuchtungseinrichtung interoperabel sein. Falls das Qualtätsprüfmodul feststellt, dass die Qualität der Aufnahmen wegen Lichtreflektionen auf Brillengläsern schlecht ist, kann das Qualitätsprüfmodul automatisch die Stärke und/oder Position und/oder Ausrichtung der Beleuchtungseinrichtung so verändern, dass die Reflektionen bei künftigen Aufnahmen verringert oder ganz vermieden werden.

Nach Ausführungsformen hat das mobile Terminal die Gestalt eines Koffers und weist zumindest einem Tragegriff, einem Bodenteil und einem Deckelteil auf.

Unter einem Koffer sei hier ganz allgemein ein Behälter verstanden, der aufklappbar ist und dessen Maße und Gewicht so ausgestaltet sind, dass er von einer erwachsenen Person transportiert werden kann, also vorzugsweise Abmessungen von maximal 60cm x 60 cm x 120 cm und ein Gewicht von maximal 31,5 kg aufweist. Nach manchen Ausführungsformen hat das mobile Terminal Abmessungen von maximal 56 cm x 45 cm x 25cm und ein Gewicht von maximal 31,5 kg.

Der Sensor umfasst nach Ausführungsformen ein Kamerasystem, das auf der Innenseite des Deckelteils angebracht sein kann. Zusätzlich oder alternativ umfasst der Sensor einen Fingerabdrucksensor, der auf der Innenseite des Bodenteils angebracht sein kann. Zusätzlich oder alternativ umfasst der Deckelteil auf seiner Innenseite eine Anzeigevorrichtung. Diese dient der Anzeige von Bedienhinweisen an den Nutzer während der Erfassung der biometrischen Daten. Die besagten Merkmale können vorteilhaft sein, da die Maße und Gestalt eines Koffers einen komfortablen Transport ermöglichen können. Durch Anbringen des Kamerasystems im Deckelteil kann die Kamera bereits durch das Aufklappen des Deckels ggf. so positioniert sein, dass das Gesicht einer auf einem Stuhl vor einem Tisch sitzenden Person ungefähr erfasst wird, wenn sich der Koffer im aufgeklappten Zustand auf dem Tisch befindet.

Nach Ausführungsformen hat das kofferförmige Terminal eine Schmalseite und eine Längsseite, wobei die Längsseite länger als die Schmalseite ist. Das Deckelteil und das Bodenteil sind vorzugsweise an der Schmalseite miteinander schwenkbar verbunden. Dies kann ermöglichen, dass beim Aufklappen des Deckels eines auf einem Tisch platzierten Terminals auch große Menschen, die auf einem Stuhl vor diesem Tisch sitzen, mit der Kamera erfasst werden können.

Nach Ausführungsformen umfasst das Deckelteil zusätzlich zu dem Kamerasystem einen semitransparenten Spiegel. Der semitransparente Spiegel ist automatisch und/oder manuell so ausrichtbar, dass der semitransparente Spiegel zwischen dem Nutzer und dem Kamerasystem positioniert ist. Der semitransparente Spiegel ist so ausgerichtet, dass auf der dem Nutzer zugewandten Seite des semitransparenten Spiegels der Strahlengang von auf den semitransparenten Spiegel einfallenden Licht parallel ist zum Strahlengang des vom semitransparenten Spiegel zurück reflektierten Teil dieses Lichts. Dies kann vorteilhaft sein, da das von dem semitransparenten Spiegel reflektierte Licht damit in Richtung des Gesichts des Nutzers geht, sofern die in den Spiegel einfallenden Lichtstrahlen von dem Gesicht des Nutzers ausgehen. Die reflektierten Strahlen können dem Nutzer Feedback darüber geben, ob er in der richtigen Entfernung zur Lichteinfallöffnung der Kamera positioniert ist und/oder ob sein Gesicht in der richtigen Höhe positioniert ist. Der Nutzer kann z.B. die korrekte Positionierung des Lichteinlasses daran erkennen, dass er seinem durch den semitransparenten Spiegel erzeugten Spiegelbild direkt "in die Augen" blickt.

Vorzugsweise überdeckt der semitransparente Spiegel dabei das Kamerasystem und ist von einer hinreichenden Größe, z.B. mindestens 5 cm x 5 cm, sodass seine Lichtreflektion dem Nutzer ein Feedbacksignal über das zu erwartende Kamerabild vermittelt. Der semitransparente Spiegel kann auch eine Positionsmarke, z.B. einen rechteckigen Rahmen, enthalten, dessen Größe und Position so mit der Optik des Kamerasystems abgestimmt ist, dass Lichtstrahlen, die innerhalb dieser Positionsmarke den semitransparenten Spiegel passieren, von dem Kamerasystem erfasst werden. Diese erfassten Lichtstrahlen können auch die biometrischen Daten enthalten, z.B. ein Gesichtsbild des Nutzers. Lichtstrahlen, die außerhalb dieser Positionsmarke den semitransparenten Spiegel passieren, werden vom Kamerasystem jedoch nicht erfasst. Entsprechend kann auch die relative Position der reflektierten Strahlen innerhalb und außerhalb der Positionsmarke dem Nutzer Feedback darüber geben, welche Teile seines Gesichts gerade als die biometrischen Daten erfasst würden, falls der Nutzer z.B. einen Auslöseknopf des Kamerasystems aktivieren würde.

Nach Ausführungsformen umfasst das mobile Terminal ferner eine erste und eine zweite Spiegelanordnung, die an der von der Person abgewandten Seite des semi-transparenten Spiegels so angeordnet sind, dass der auf die zweite Spiegelanordnung fallende durch den semi-transparenten Spiegel transmittierte Teil des Lichts durch die zweite Spiegelanordnung auf die erste Spiegelanordnung gelenkt wird, wobei die erste Spiegelanordnung so angeordnet ist, dass dieser auf die erste Spiegelanordnung gelenkte transmittierte Teil des Lichts auf das Kamerasystem reflektiert wird, wobei die Position eines Lichteinlasses für das Kamerasystem an die Position des semi-transparenten Spiegels gekoppelt ist. Die Verwendung einer solchen ersten und zweiten Spiegelanordnung kann vorteilhaft sein, da der Strahlengang innerhalb des Terminals verlängert werden kann. Die Umleitung des Strahlengangs kann eine Positionierung des Kamerasystems im unteren Teil des aufgeklappten Deckelteils ermöglichen, was wiederum eine schmalere Bauweise des Deckelteils und damit eine kompaktere Bauweise des Terminals insgesamt ermöglichen kann. Ein längerer Strahlengang kann ferner vorteilhaft sein, da dadurch der Schärfentiefenbereich vergrößert werden kann, was die Bildqualität verbessern kann. Außerdem können durch Verlängerung des Strahlengangs zwischen Kameralinse und dem Gesicht des Nutzers Verzerrungseffekte verhindert oder zumindest reduziert werden. Verzerrungseffekte im Gesichtsbild ("Knollennaseneffekt" bei Automatenbildern) können die Qualität der Aufnahmen vermindern und die die Performanz der biometrischen Verfahren negativ beeinflussen.
Die Verwendung von Spiegelanordnungen kann ferner den Vorteil haben, dass die Kamera in einer beliebigen Ausrichtung bezüglich des Nutzers montiert sein kann, also z.B. auch nach unten weisend, so dass eine Verschmutzung der Kamera vermieden werden kann.

Nach Ausführungsformen sind die erste Spiegelanordnung und/oder die zweite Spiegelanordnung parallel verschiebbar zum Strahlengang des vom semi-transparenten Spiegel transmittierten Teils des Lichts zwischen der ersten Spiegelanordnung und der zweiten Spiegelanordnung. Dies kann vorteilhaft sein, da z.B. die zweite Spiegelanordnung an den Lichteinlass der Kamera und den semitransparenten Spiegel vor dem Lichteinlass gekoppelt sein kann und somit zusammen mit diesem Lichteinlass und dem semitransparenten Spiegel z.B. in der Vertikalen verschoben werden kann, etwa um die Position des Lichteinlasses der Körpergröße eines Nutzers anzupassen.

Unter einer "Kopplung" wird hier eine beliebige Art von gegenseitiger automatischer Beeinflussung verstanden, die sicherstellt, dass bei Verschiebung der zweiten Spiegelanordnung auch die erste Spiegelanordnung entsprechend verschoben wird. Die Kopplung kann rein mechanisch erfolgen oder über Elektromotoren oder Aktuatoren, die unter zu Hilfenahme von weiteren Energiequellen die Verschiebung der ersten Spiegelanordnung bewirken. Hierbei kann auch ein Software, Firmware oder Hardwaremodul des Terminals die Verschiebung steuern.

Nach Ausführungsformen weisen die erste Spiegelanordnung und die zweite Spiegelanordnung eine erste Kopplung auf. Die erste Kopplung verschiebt automatisch bei der Verschiebung der zweiten Spiegelanordnung die erste Spiegelanordnung derart, dass der optische Abstand zwischen der zweiten Spiegelanordnung und einem Lichteinlass des Kamerasystems konstant bleibt. Dies kann vorteilhaft sein, da es hierdurch ermöglicht wird, beispielsweise den Lichteinlass und den transparenten Spiegel, die an die zweite Spiegelanordnung gekoppelt sein können, in der Vertikalen zu verschieben und so die Position des Lichteinlasses an die Körpergröße der Person anzupassen, wobei während der Anpassung der optische Abstand zwischen dem Lichteinlass und dem Kamerasystem konstant bleibt. Die Konstanz kann bewirken, dass durch das Verschieben die Größe des Gesichts nicht verändert wird, der Nutzer also weder nach vorne noch nach hinten rücken muss um eine durch die Verschiebung der Optik bewirkte Veränderung der Bildgröße zu kompensieren.

Nach Ausführungsformen ist die erste Spiegelanordnung bei konstanter Position der zweiten Spiegelanordnung automatisch so verschiebbar, dass der optische Abstand zwischen dem Gesicht des Nutzers und dem Lichteinlass des Kamerasystems einem vorgegebenen Wert entspricht. Zusätzlich oder alternativ dazu ist die erste Spiegelanordnung bei konstanter Position der zweiten Spiegelanordnung automatisch so verschiebbar, dass die Größe des durch das Kamerasystem erfassten Gesichtsbildes und/oder Irisbildes des Nutzers zur Erfassung der biometrischen Daten einem vorgegeben Wert entspricht. Der vorgegebene Wert kann z.B. von dem Terminal vorgegeben werden und z.B. beinhalten, wie viele Pixel ein Gesicht, das z.B. mittels Bildanalyse in einer ersten "Testaufnahme" aufgenommenen Bildes, breit und/oder hoch sein sollte. Durch automatische Verschiebung der ersten Spiegelanlage so lange, bis die gemessenen Bildgrößen und damit Gesichtsgrößen oder Irisgrößen dem gewünschten Referenzwert entsprechen, können Bilder in hinreichender Größe und Qualität vollautomatisch oder mit nur geringfügigem Zutun des Nutzers aufgenommen werden.

Nach Ausführungsformen beinhaltet das mobile Terminal ferner eine Beleuchtungseinrichtung zur Beleuchtung des Nutzers, z.B. Weißlicht und/oder NIR LEDs. Die Beleuchtungseinrichtung und die erste Spiegelanordnung weisen eine zweite Kopplung auf. Die zweite Kopplung steuert automatisch bei der Verschiebung der ersten Spiegelanordnung das Leuchtverhalten der Beleuchtungseinrichtung. Dies kann vorteilhaft sein, da bei einer Verschiebung der ersten Spiegelanordnung, etwa zum Zwecke der Höhenanpassung der Kamera, die Beleuchtung automatisch mitbewegt wird, so dass der Nutzer nicht noch zusätzlich auch die Beleuchtung justieren muss. Eine besonders nutzerfreundliche und intuitive Benutzung des Terminals, die auch für ungeübte Nutzer geeignet ist, könnte damit bereitgestellt werden.

Nach Ausführungsformen beinhaltet das mobile Terminal ferner ein weiteres Kamerasystem, insbesondere ein Weitwinkelkamerasystem, zur automatischen Positionierung der Kamera und ggf. auch zur automatischen Positionierung der ersten und zweiten Spiegelanordnung. Dieses weitere Kamerasystem könnte zum Beispiel zunächst eine Weitwinkelaufnahme anfertigen um darin per Bildanalyse die ungefähre Position eines Nutzers oder dessen Gesichts oder dessen Iris im Raum zu erkennen. Anhand dieser ungefähren Position kann das eigentlich zur Aufnahme der biometrischen Daten bestimmte Kamerasystem in der Vertikalen des aufgeklappten Deckelteils auf und ab bewegt werden und ggf. auch sein Zoom geändert werden, so dass das Gesicht oder die Iris des Nutzers in der richtigen Höhe und Größe aufgenommen werden kann.

Nach Ausführungsformen sind das Kamerasystem und die Beleuchtungseinrichtung Bestandteil des Deckelteils.

Nach Ausführungsformen umfasst das mobile Terminal einen Sensor zur Messung der Umgebungshelligkeit und eine Kalibriereinheit. Die Kalibriereinheit dient zur automatischen Einstellung der Beleuchtungsstärke der Beleuchtungseinrichtung und/oder zur automatischen Einstellung der Lichtempfindlichkeit des Kamerasystems in Abhängigkeit von der gemessenen Umgebungshelligkeit. Dies kann vorteilhaft sein da die sie die Nutzung des mobilen Terminals als "Home-Enrollment" System weiter vereinfacht: die Kalibriereinheit kann dafür sorgen, dass eine Erfassung biometrischer Bilddaten auch unter verschiedenen Helligkeitsbedingungen verlässlich möglich ist.

Nach Ausführungsformen umfasst das mobile Terminal eine Batterie und/oder ein Netzteil, wobei die Batterie und/oder das Netzteil und der Datenspeicher vorzugsweise im Bodenteil angebracht sind. Dies kann vorteilhaft sein, da das Gewicht einer Batterie und/oder eines Netzteils im Bodenteil den Koffer im aufgeklappten Zustand stabilisieren kann. So könnte ggf. bewirkt werden, dass der Koffer im aufgeklappten Zustand ohne weitere Befestigungsmittel stabil steht und sogar bei einem geringfügigen Umkippen des Deckelteils nach hinten um bis zu 8° nicht umkippt. Nach Ausführungsformen umfasst das mobile Terminal eine Schnittstelle zum Empfang der Authentifizierungsdaten von einem dem Nutzer zugeordneten weiteren Sicherheitsdokument. Beispielsweise können Name und Anschrift eines Nutzers und/oder bereits zu einem früheren Zeitpunkt erfasste biometrische Daten des Nutzers aus einem Personalausweis oder Reisepass, der noch gültig ist aber evtl. in Kürze abläuft, ausgelesen werden. Auch die MRZ (machine readable zone) und/oder ein auf dem Sicherheitsdokument aufgedruckter Code, z.B. eine Karten-ID oder Nutzer-ID, können durch das mobile Terminal automatisch erfasst und empfangen werden. Diese Daten können zum Beispiel von dem mobilen Terminal mit Namens- Adress- ID- oder sonstigen Daten verglichen werden, die in dem Datenspeicher des mobilen Terminals im Zuge der Vorbereitung des Terminals zum Versand an diesen speziellen Nutzer als Referenzdaten gespeichert wurden. Die Übertragung der Authentifizierungsdaten von dem Sicherheitsdokument an das mobile Terminal kann kontaktlos, z.B. mittels einer RFID Schnittstelle, oder kontaktbehaftet erfolgen.

Nach Ausführungsformen ist das Deckelteilteil mit dem Bodenteil über eine Achse schwenkbar verbunden. Das Deckelteil verharrt in einer einmal eingenommenen verschwenkten Position, wobei eine Schwenkung gegen eine Orthogonale zur Oberfläche des Bodenteils über einen Winkel von 8° hinaus unmöglich ist oder mechanisch erschwert ist und/oder eine Ausgabe einer Warnmeldung an den Nutzer bewirkt. Dies kann vorteilhaft sein, da durch das Verschwenken innerhalb eines kleinen Winkelbereichs der Sensor, z.B. das Kamerasystem, auf einfache Weise an die Körpergröße des Nutzers so angepasst werden kann, dass das Gesicht von der Kamera erfasst wird. Eine noch stärkere Verschwenkung könnte die Qualität der biometrischen Bilddaten jedoch zu sehr reduzieren. Dies kann jedoch durch eine entsprechende Warnmeldung an den Nutzer oder einen erhöhten mechanischen Widerstand bei einer Verschwenkung über 8° hinaus (jeweils in Richtung des Nutzers oder entgegen der Richtung des Nutzers) deutlich gemacht oder ggf. auch komplett unterbunden werden.

Nach Ausführungsformen umfasst das mobile Terminal eine Lokalisierungseinheit, die eine aktuelle Position des mobilen Terminals während der Erfassung der biometrischen Daten erfasst. Der Datenspeicher enthält eine geographische Gebietsangabe, z.B. einen durch GPS Koordinaten definierten Bereich eines Gebäudes oder eines Stadtteils. Die Speicherung der erfassten biometrischen Daten in dem mobilen Terminal erfolgt nur dann, wenn die bei der Erfassung der biometrischen Daten erfasste aktuelle Position sich innerhalb der geographischen Gebietsangabe befindet. Dies kann vorteilhaft sein, weil das Erfassen der biometrischen Daten dadurch noch sicherer gemacht werden kann: Wenn eine Behörde auf eine Bestellung durch den Nutzer hin das mobile Terminal für den Versand vorbereitet, sind die Anschrift des Nutzers, an welche das Terminal geliefert werden soll, ja bekannt. Dadurch, dass man z.B. die ungefähren GPS Koordinaten dieser Anschrift in das mobile Terminal einprogrammiert, so dass es nur dann biometrische Daten erfasst und speichert, wenn es sich innerhalb eines Maximalabstands von dieser Anschrift befindet, also z.B. innerhalb eines Radius von 50 m um die besagte Adresse herum, kann zusätzlicher Schutz davor geboten werden, dass Dritte das Terminal auf seinem Postweg zurück an den Dokumentenaussteller abfangen und mit gefälschten biometrischen Daten bestücken. Dies ist allein schon dadurch nicht möglich, dass sich diese Dritten nicht innerhalb des vordefinierten geographischen Bereiches befinden.

Nach Ausführungsformen umfasst das mobile Terminal eine Uhr, die eine aktuelle Uhrzeit während der Erfassung der biometrischen Daten erfasst. Der Datenspeicher enthält eine Angabe eines zulässigen Zeitraums, z.B. einige Tage oder Wochen nach dem Versand des Terminals an den Nutzer. Die Speicherung der erfassten biometrischen Daten in dem mobilen Terminal erfolgt nur, wenn die bei der Erfassung der biometrischen Daten erfasste aktuelle Uhrzeit sich innerhalb des zulässigen Zeitraums befindet. Analog zu der oben genannten räumlichen Beschränkung der Funktionalität des mobilen Terminals kann eine alternative oder zusätzliche zeitliche Beschränkung der Möglichkeit der Erfassung biometrischer Daten die Sicherheit des "Heim-Enrollment" Prozesses erhöhen.

Nach manchen Ausführungsformen wird, analog zu der hier beschriebenen örtlichen und zeitlichen Beschränkung der Erfassung der biometrischen Daten, auch eine räumliche und/oder zeitliche Beschränkung des Zugriffs des Operators zum Auslesen der biometrischen Daten aus dem Terminal in dem mobilen Terminal implementiert. So könnte das mobile Terminal z.B. GPS Koordinaten derjenigen Behördenstelle(n) gespeichert haben, welche berechtigt sind, die erfassten biometrischen Daten auszulesen und/oder einen vordefinierten Zeitraum gespeichert haben, innerhalb welchen die in dem mobilen Terminal gespeicherten Daten ausgelesen werden können. Die Authentifizierung des Operators gegenüber dem mobilen Terminal könnten also auch eine Prüfung umfassen, ob sich das mobile Terminal innerhalb eines vordefinierten Maximalabstandes zu den gespeicherten GPS Koordinaten (oder anderen technisch erfassbaren Indikatoren der räumlichen Position des Terminals) der besagten Behörde bzw. des Kartenausstellers befindet, und eine Authentifizierung nur dann ermöglichen, wenn dies der Fall ist. Auch könnte eine Authentifizierung nach Ablauf eines vordefinierten maximalen Gültigkeitszeitraumes, der z.B. mit dem Zeitpunkt des Versandes des mobilen Terminals an den Nutzer beginnen kann, durch die Authentifizierungseinheit abgelehnt werden, was die Sicherheit der erfassten biometrischen Daten vor dem Auslesen durch unberechtigte Dritte erhöht.

In einem weiteren Aspekt betrifft die Erfindung ein Verfahren zum Einbringen von biometrischen Daten eines Nutzers in ein Sicherheitsdokument. Das Verfahren umfasst:
- authentifizierung des Nutzers gegenüber einem Server mit ersten Authentifizierungsdaten;
- nach erfolgreicher Authentifizierung gegenüber dem Server, Verwenden der ersten Authentifizierungsdaten durch den Server zur Generierung oder Identifizierung eines dem Nutzer spezifisch zugeordneten Berechtigungsnachweises, wobei der Berechtigungsnachweis seinen Besitzer als berechtigt ausweist, die biometrische Daten des Nutzers zu erfassen und zu speichern; Der Berechtigungsnachweis ermächtigt das Terminal also nicht, die biometrischen Daten anderer Personen zu erfassen und zu speichern. Der Benutzungsnachweis kann also eine Personalisierung des mobilen Terminals speziell für den Nutzer, der sich gegenüber dem Server authentifiziert hat, bewirken.

- speichern des Berechtigungsnachweises in einem mobilen Terminal, wobei das mobile Terminal zumindest einen Sensor umfasst; das mobile Terminal kann daraufhin an den Nutzer übermittelt werden, z.B. per Post oder Kurierdienst;
- Authentifizierung des Nutzers gegenüber dem mobilen Terminal mittels der ersten Authentifizierungsdaten oder mittels zweiter Authentifizierungsdaten des Nutzers;
- Authentifizierung des mobilen Terminals gegenüber dem Nutzer mittels des gespeicherten Berechtigungsnachweises;
- nur bei gegenseitiger erfolgreicher Authentifizierung: automatische oder semi-automatische Erfassung der biometrischen Daten des Nutzers durch den Sensor des mobilen Terminals;
- automatische Prüfung der Echtheit der erfassten biometrischen Daten durch das mobile Terminal;
- nur im Falle einer festgestellten Echtheit der erfassten biometrischen Daten, Speicherung der erfassten biometrischen Daten in dem mobilen Terminal in geschützter Form; das mobile Terminal kann danach beispielsweise von dem Nutzer an den Betreiber des Servers und/oder den Aussteller des Sicherheitsdokuments übermittelt werden, z.B. auf dem Postweg;
- Authentifizierung eines Operators mittels dritter Authentifizierungsdaten, die dem Operator zugeordnet sind, gegenüber dem mobilen Terminal;
- nur im Falle einer erfolgreichen Authentifizierung des Operators, Ermöglichung des Auslesens der in dem mobilen Terminal gespeicherten biometrischen Daten zur Übertragung der ausgelesenen biometrischen Daten an das Sicherheitsdokument; und
- Einbringen der übertragenen biometrischen Daten in das Sicherheitsdokument. Dieses Verfahren kann vorteilhaft sein, weil es eine sichere Erfassung von biometrischen Daten eines Nutzers für die Ausstellung eines personalisierten Sicherheitsdokumentes ermöglichen kann, ohne dass hierfür eine aufwändige und teure technische Infrastruktur auf Seiten des Dokumentenausstellers vorgehalten werden muss.

Nach weiteren Ausführungsformen umfasst das Verfahren ferner eine automatische Prüfung der Qualität der erfassten biometrischen Daten durch das mobile Terminal, wobei die Speicherung der erfassten biometrischen Daten in dem mobilen Terminal nur erfolgt, wenn die erfassten biometrischen Daten zudem vordefinierte Qualitäts-Mindestanforderungen erfüllen.

Beispielsweise kann die Authentifizierung des Nutzers gegenüber dem Server über ein Netzwerk, z.B. das Internet, erfolgen. Der Server gehört vorzugsweise einer Organisation, z.B. einer Behörde oder einer Firma, die das Sicherheitsdokument ausstellt, für welches die biometrischen Daten erfasst werden.

Nach Ausführungsformen werden zusätzlich zu dem Berechtigungsnachweis eine geographische Gebietsangabe und/oder ein zulässige Zeitraum in dem mobilen Terminal gespeichert. Die geographische Gebietsangabe und/oder der zulässige Zeitraum werden dabei für jeden Bereitstellungsvorgang des mobilen Terminals an den Nutzer neu ermittelt.

Nach Ausführungsformen umfasst die Authentifizierung des Nutzers gegenüber dem Server mit den ersten Authentifizierungsdaten:
- Einbringen eines weiteren Sicherheitsdokuments, das dem Nutzer zugeordnet ist, in ein Lesegerät eines Nutzer-Computers, wobei das weitere Sicherheitsdokument die ersten Authentifizierungsdaten geschützt gespeichert hat; bei dem weiteren Sicherheitsdokument kann es sich z.B. um einen noch gültigen, aber in Kürze ablaufenden elektronischen Personalausweis oder einen Reisepass handeln.
- Senden einer Anfrage zur Bereitstellung des mobilen Terminals über ein Netzwerk von dem Nutzer-Computer an den Server, wobei die Anfrage einen Identifikator des Nutzers enthält;
- Senden einer Authentisierungsanfrage beinhaltend den Identifikator von dem Server an einen eID-Server;
- Aufbau eines sicheren Datenübertragungskanals zwischen dem eID-Server und dem weiteren Sicherheitsdokument;
- Prüfung der Authentizität und Integrität des weiteren Sicherheitsdokuments durch den eID-Server;
- Senden einer Bestätigung der Authentizität und Integrität von dem eID-Server an das Nutzer-Computersystem;
- Auslesen der ersten Authentifizierungsdaten durch den eID-Server; das Auslesen der ersten Authentifizierungsdaten kann beispielsweise nach vorhergehender Vorlage eines Berechtigungszertifikats eines auf dem Server bereitgestellten Dienstes gegenüber einem Nutzer-Computersystem erfolgen. Das Nutzer-Computersystem kann beispielsweise einen Browser beinhalten, mit welchem der Nutzer im Internet ein Bestellformular zur Bestellung des mobilen Terminals geöffnet hat. Um sich gegenüber dem Server zu authentifizieren, kann der Nutzer beispielsweise durch Eingabe einer PIN eines aktuell gültigen Sicherheitsdokuments dem Server erlauben, personenbezogene Daten aus dem aktuell gültigen Sicherheitsdokument auszulesen und diese als die ersten Authentifizierungsdaten zu verwenden; und
- Übertragung der ausgelesenen ersten Authentifizierungsdaten von dem eID-Server an den Server zur Authentifizierung des Nutzers gegenüber dem Server, wobei das mobile Terminal dem Nutzer nur bei erfolgreicher Authentifizierung des Nutzers gegenüber dem Server bereitgestellt wird.

Nach Ausführungsformen ist neben dem Berechtigungsnachweis auch ein Referenzwert in dem mobilen Terminal gespeichert. Der Referenzwert ist für das weitere Sicherheitsdokument spezifisch. Die Authentifizierung des Nutzers gegenüber dem mobilen Terminal mit den zweiten Authentifizierungsdaten umfasst: Einbringen eines weiteren Sicherheitsdokuments, das dem Nutzer zugeordnet ist und das einen Sicherheitsdokument-Identifikator gespeichert hat, in eine Leseschnittstelle des mobilen Terminals; Authentifizierung des Nutzers gegenüber dem weiteren Sicherheitsdokument durch Eingabe einer PIN über eine Dateneingabeschnittstelle des mobilen Terminals; Nach erfolgreicher Authentifizierung gegenüber dem weiteren Sicherheitsdokument, Übertragung des Sicherheitsdokument-Identifikators an das mobile Terminal, wobei der Sicherheitsdokument-Identifikator als die zweiten Authentifizierungsdaten fungiert; Beispielsweise kann der Sicherheitsdokument-Identifikator aus einer MRZ des weiteren Sicherheitsdokuments bestehen; und Vergleichen des übertragenen Sicherheitsdokument-Identifikators mit dem gespeicherten Referenzwert durch das mobile Terminal zur Authentifizierung des Nutzers gegenüber dem mobilen Terminal.

Nach Ausführungsformen umfasst die Authentifizierung des Nutzers gegenüber dem mobilen Terminal eine Durchführung eines BAC-Protokolls und/oder eines EAC-Protokolls und/oder eines PACE-Protokolls und/oder eines SAC-Protokolls zwischen dem mobilen Terminal und dem weiteren Sicherheitsdokument. Dies kann die Sicherheit des Verfahrens weiter erhöhen. Zusätzlich oder alternativ dazu kann die Authentifizierung des Nutzers gegenüber dem Terminal dadurch erfolgen, dass das mobile Terminal einen vom Nutzer in das mobile Terminal eingegebenen Datenwert empfängt und/oder das mobile Terminal den Datenwert von einem weiteren Sicherheitsdokument (114) des Nutzers ausliest. Das mobile Terminal vergleicht daraufhin den empfangenen oder ausgelesenen Datenwert mit einem in dem mobilen Terminal gespeicherten Referenzwertes. Der Referenzwert kann zum Beispiel von einem Angestellten oder Vertreter des Dokumentenausstellers, der hier als 'Operator' bezeichnet wird, im Zuge der Personalisierung des Terminals in dem Datenspeicher des Terminals gespeichert werden.

Nach Ausführungsformen umfasst der Berechtigungsnachweis ein Berechtigungszertifikat. Die Authentifizierung des mobilen Terminals gegenüber dem Nutzer umfasst: Übermittlung des Berechtigungszertifikats von dem mobilen Terminal an das weitere Sicherheitsdokument; und Prüfung des Berechtigungszertifikats durch einen Prozessor des weiteren Sicherheitsdokuments.

Nach Ausführungsformen hat das weitere Sicherheitsdokument biometrische Referenzdaten des Nutzers gespeichert. Die automatische Prüfung der Echtheit der erfassten biometrischen Daten durch das mobile Terminal umfasst ein Auslesen der biometrischen Referenzdaten von dem weiteren Sicherheitsdokument durch das mobile Terminal und ein Vergleichen der ausgelesenen biometrischen Referenzdaten mit den erfassten biometrischen Daten des Nutzers. Falls die erfassten biometrischen Daten mehr als einen vordefinierten Maximalwert von den biometrischen Referenzdaten abweichen, erfolgt eine Rückgabe eines Ergebnisses, dass die ermittelten biometrischen Daten nicht echt sind. Die Höhe der Abweichung kann dabei durch Verfahren ermittelt werden, die je nach Art der verglichenen biometrischen Daten abweichen, da eine Bestimmung einer Ähnlichkeit von Gesichtern anders implementiert sein kann als eine Bestimmung der Ähnlichkeit von Fingerabdrucksdaten. Das Verfahren umfasst ferner eine Authentifizierung des Nutzers gegenüber dem weiteren Sicherheitsdokument durch Eingabe einer PIN über eine Dateneingabeschnittstelle des mobilen Terminals. Nach erfolgreicher Authentifizierung gegenüber dem weiteren Sicherheitsdokument erfolgt eine Übertragung des Sicherheitsdokument-Identifikators an das mobile Terminal, wobei der Sicherheitsdokument-Identifikator als die zweiten Authentifizierungsdaten oder ein Bestandteil derselben fungiert. Es erfolgt auch ein Vergleich des übertragenen Sicherheitsdokument-Identifikators mit dem gespeicherten Referenzwert durch das mobile Terminal zur Authentifizierung des Nutzers gegenüber dem mobilen Terminal. Die Nutzung der biometrischen Daten des alten Dokuments für Echtheitsprüfung kann vorteilhaft sein, da sie eine zusätzliche Sicherheit dafür gewähren kann, dass die erfassten biometrischen Daten des Nutzers tatsächlich derjenigen Person zuzuordnen sind, an welche das Terminal gesendet wurde (und welche auch den Daten des alten Sicherheitsdokuments entsprechen müsste).

Nach Ausführungsformen werden die zweiten Authentifizierungsdaten zusammen mit Metadaten des Nutzers von dem weiteren Sicherheitsdokument an das mobile Terminal übertragen. Das mobile Terminal zeigt die übertragenen Metadaten über eine Anzeigevorrichtung des mobilen Terminals an. Das mobile Terminal empfängt von dem Nutzer über eine Eingabeschnittstelle des mobilen Terminals Eingabedaten und modifiziert die angezeigten Metadaten durch die empfangenen Eingabedaten. Die Speicherung der erfassten biometrischen Daten umfasst eine Speicherung der modifizierten Metadaten. Die in dem mobilen Terminal gespeicherten biometrischen Daten werden zusammen mit den modifizierten Metadaten ausgelesen, z.B. mittels eines speziellen Lesegeräts, über das der Operator des Servers bzw. das Personal des Dokumentenausstellers verfügt, und an das Sicherheitsdokument übertragen. Bei den Metadaten kann es sich zum Beispiel um beschreibende Daten des Nutzers handeln, z.B. dessen Adresse, Geburtstag, Geburtsort, Geschlecht, Namenszusätze oder ähnliches. Das Auslesen "alter" beschreibender Daten aus noch gültigen Sicherheitsdokumenten und Speicherung der ausgelesenen und ggf. modifizierten beschreibenden Daten in dem neuen Sicherheitsdokument kann vorteilhaft, sein, weil es die manuelle Arbeit des Eintippens der beschreibenden Daten des Nutzers wie etwas Adressdaten etc. reduzieren kann.

Im Weiteren werden Ausführungsformen der Erfindung mit Bezugnahme auf die Zeichnungen näher erläutert. Es zeigen:
- Figur 1: ein Blockdiagramm des Ablaufs des "Heim-Enrollment",
- Figur 2: ein aufgeklapptes, kofferförmiges mobiles Terminal von vorne,
- Figur 3: ein Blockdiagramm des Datenspeichers des Terminals,
- Figur 4: ein aufgeklapptes, mobiles Terminal von der Seite,
- Figur 5: ein weiteres aufgeklapptes, mobiles Terminal von der Seite,
- Figur 6: ein weiteres aufgeklapptes, mobiles Terminal von der Seite, und
- Figur 7: ein Flussdiagram für ein Verfahren nach einer Ausführungsform.

Elemente der nachfolgenden Ausführungsformen, die einander entsprechen, werden mit denselben Bezugszeichen gekennzeichnet.

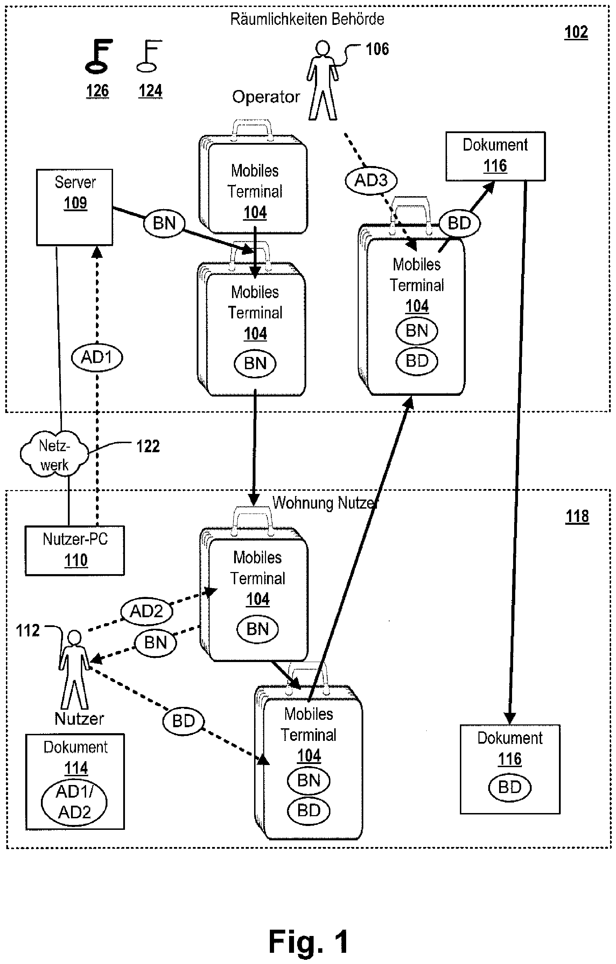

**Figur 1** zeigt ein Blockdiagramm des Ablaufs des "Heim-Enrollment" nach einer Ausführungsform. Ein Nutzer 112, z.B. ein Bürger eines Staates, ist im Besitz eines Sicherheitsdokuments 114, z.B. eines elektronischen Personalausweises, auf welchem personenbezogene beschreibende Daten ("Metadaten") und biometrische Daten gespeichert sind und welches in Kürze auslaufen wird.

Um ein neues Sicherheitsdokument mit aktuellen biometrischen Daten zu erhalten, muss der Nutzer, der sich z.B. in seinen Wohnräumen 118 aufhalten kann, nicht die Räumlichkeiten 102 einer Behörde aufsuchen, welche die entsprechende Infrastruktur für die fälschungssichere Erfassung biometrischer Daten besitzen. Stattdessen ist es ausreichend, dass der Nutzer beispielsweise mittels eines Browsers, der auf seinem Computer 110 installiert ist, ein Antragsformular öffnet. Das Antragsformular kann z.B. als HTML Formular von einem Server 108 der das Sicherheitsdokument ausstellenden Behörde über das Internet 112 bereitgestellt werden. Der Nutzer 112 kann nun seine persönlichen Daten, insbesondere seinen Namen, seine Anschrift und die Art des Sicherheitsdokuments, das ausgestellt werden soll, spezifizieren. Damit der Server den Antrag weiterverarbeitet, ist es jedoch erforderlich, dass sich der Nutzer gegenüber dem Server mittels erster Authentifizierungsdaten AD1 authentifiziert. Dies kann z.B. mittels eines Passworts geschehen oder mit Hilfe des noch gültigen Sicherheitsdokuments 114.

Die Authentifizierung mittels des noch gültigen Sicherheitsdokuments 114 kann beispielsweise folgendermaßen ablaufen: der Aufruf des Antragformulars bewirkt die Ausführung einer Applikation auf dem Server 108, die hier als Bestelldienst bezeichnet wird. Der Bestelldienst erfordert von dem Nutzer eine Online-Authentifizierung. Hierfür legt der Nutzer das Sicherheitsdokument 114 in ein Lesegerät, das mit dem Nutzer-Computer 110 verbunden ist. Der Bestelldienst sendet eine Authentisierungsanfrage an einen eID-Server (hier nicht dargestellt). Zwischen dem eID-Server sowie einer auf dem Nutzer-Computer 110 installierten Client-Software (z. B. AusweisApp), dem Lesegerät und einem Chip des Sicherheitsdokuments 114 wird ein sicherer Kanal aufgebaut und die Authentizität des Betreibers des Bestelldiensts sowie die Authentizität und Integrität (Fälschungssicherheit) des Dokuments 114 geprüft. Die Client-Software zeigt dem Nutzer 112 ein über den sicheren Datenübertragungskanal übermitteltes Berechtigungszertifikat des Betreibers des Bestelldiensts und die angefragten Ausweisdaten bzw. Datenkategorien an. Der Nutzer entscheidet, welche Ausweisdaten er übermitteln möchte. Durch Eingabe der PIN bestätigt der Nutzer das Auslesen und die Übermittlung der Daten AD1, die hier als "erste Authentifizierungsdaten" bezeichnet werden, von dem Dokument 114 an den eID-Server. Der eID-Server sendet eine Authentisierungsantwort und die Ausweisdaten an den Bestelldienst. Die Authentifizierungsantwort und die Ausweisdaten werden ausgelesen. Der Dienst prüft die Authentisierungsergebnisse und entscheidet, ob die Authentifizierung als erfolgreich anzusehen ist. Abschließend erfolgt eine Ergebnisantwort an den Nutzer.

Falls sich der Nutzer 112 sich mittels der ersten Authentifizierungsdaten AD1 erfolgreich gegenüber dem Bestelldienst und damit auch gegenüber dem Server 108 authentifiziert hat, wird die Ausstellung eines Berechtigungsnachweises BN speziell für den Nutzer 112 veranlasst. Der Berechtigungsnachweis BN kann z.B. automatisch von dem Server 108 generiert werden, oder auf einem anderen Computer, der von dem Aussteller des neuen, beantragten Sicherheitsdokuments betrieben wird. Die Generierung des Berechtigungsnachweises kann vollautomatisch erfolgen oder halbautomatisch unter Mitwirkung und Kontrolle eines Operators 106, der für den Aussteller des neuen Dokuments tätig ist. Der Berechtigungsnachweis kann z.B. in Form eines Berechtigungszertifikats ausgestellt werden oder dieses beinhalten. Der Berechtigungsnachweis wird in einem Datenspeicher eines mobilen Terminals 104 gespeichert. Außerdem können in dem mobilen Terminal ein oder mehrere Referenzwerte, die spezifisch für den Nutzer sind, z.B. dessen Name und Anschrift, oder ein Geheimcode, der dem Nutzer auf sicherem Wege mitgeteilt wird, gespeichert werden. Dadurch wird das Terminal für den Antragsteller 112 personalisiert. Ggf. können noch weitere Berechtigungszertifikate und Referenzwerte gespeichert werden, z.B. für Familienangehörige, die unter der gleichen Adresse gemeldet sind.

Das personalisierte mobile Terminal kann nun an die im Bestellformular und/oder im Ausweis 114 vermerkte Adresse gesendet werden, z.B. kostengünstig auf dem Postweg.

Der Nutzer 112 kann nach Empfang des mobilen Terminals dieses starten, z.B. dadurch, dass er das kofferförmige Terminal auf einen Tisch stellt, den Deckel aufklappt und einen Startknopf betätigt. Das mobile Terminal ist im Hinblick auf die Benutzerführung so konfiguriert, dass auch einem technisch nicht versierten Laien zu jeder Zeit klare Anweisungen gegeben werden, welcher Schritt als nächstes vorzunehmen ist, um biometrische Daten in hinreichender Qualität zu erfassen.

Zunächst ist jedoch erforderlich, dass der Nutzer sich gegenüber dem mobilen Terminal authentifiziert. Dies kann z.B. dadurch geschehen, dass er einen von der dokumentausstellenden Instanz übermittelten Geheimcode in das Terminal eingibt oder persönliche Daten aus einem noch gültigen Sicherheitsdokument durch das Terminal ausgelesen werden und die eingegebenen oder ausgelesenen Daten mit den Referenzwerten verglichen werden. Außerdem muss das Terminal sich mittels des Berechtigungsnachweises BN sich gegenüber dem Nutzer 112 authentifizieren um nachzuweisen, dass das Terminal berechtigt ist, biometrische Daten von dem Nutzer zu erfassen.

Nach erfolgreicher gegenseitiger Authentifizierung von Nutzer 112 und Terminal 104 erfasst das Terminal biometrische Daten BD des Nutzers und speichert diese in einem internen Datenspeicher.

Die Speicherung der biometrischen Daten kann zum Beispiel so erfolgen, dass ein in dem mobilen Terminal gespeicherter, öffentlicher Schlüssel 312 die biometrischen Daten BD verschlüsselt und ein in dem Terminal ebenfalls gespeicherter, privater Signaturschlüssel 314 die Daten signiert. Der private Signaturschlüssel 314 bildet dabei mit einem öffentlichen Signaturprüfschlüssel 126 des Dokumentenausstellers ein asymmetrisches kryptographisches Schlüsselpaar. Der öffentliche Verschlüsselungsschlüssel 312 bildet dabei mit einem privaten Entschlüsselungsschlüssel 124 des Dokumentenausstellers ein asymmetrisches kryptographisches Schlüsselpaar. Sowohl der öffentliche Signaturprüfschlüssel 126 als auch der private Entschlüsselungsschlüssel 124 werden also vom Aussteller des Sicherheitsdokuments 116, z.B. einer Behörde, verwaltet.

Nach erfolgreicher Erfassung der biometrischen Daten kann das kofferförmige Terminal 104 wieder zusammengeklappt und auf dem Postweg an die den neuen Ausweis ausstellende Behörde gesendet werden. Dort angekommen, authentifiziert sich ein Operator 106, z.B. ein Angestellter der Behörde, mittels dritter Authentifizierungsdaten, z.B. mittels eines Passworts, mittels eines speziellen Software- oder hardwarebasierten Sicherheitstokens oder dergleichen gegenüber dem Terminal. Nur im Falle einer erfolgreichen Authentifizierung kann der Operator auf die in dem Terminal gespeicherten Daten zugreifen, wozu zum Beispiel auch ein Entschlüsselungsschritt der biometrischen Daten des Nutzers mittels des privaten Entschlüsselungsschlüssels 124 gehören kann. Zusätzlich zu der Entschlüsselung kann auch noch eine Signaturprüfung der signierten biometrischen Daten BD mittels des öffentlichen Signaturprüfschlüssels 126 vorgenommen werden um sicherzustellen, dass die erfassten biometrischen Daten nicht durch Dritte manipuliert wurden.

Nach Ausführungsformen besitzt das mobile Terminal neben den Sensoren für die biometrischen Daten und den bereits genannten Nutzerschnittstellen wie Tastatur, Unterschriftenpad, NFC-Interface etc. keine kontaktbehafteten Datenaustauschschnittstellen, hat also z.B. keine USB-Schnittstelle oder CD-Laufwerk. Das Terminal besitzt lediglich eine kontaktlose Datenaustauschschnittstelle, z.B. einen WLAN-Adapter zum Einbringen des Berechtigungsnachweises und der Referenzwerte und zum Auslesen der erfassten biometrischen Daten durch den Operator. Diese kontaktlose Schnittstelle ist nur dadurch aktivierbar, dass der Operator ein Hardwaretoken an das Terminal anschließt, welches zur sicheren Authentifizierung des Operators gegenüber dem Terminal dient. Es ist auch möglich, dass der WLAN Adapter auf die Zugangsdaten des WLAN Netzes der ausstellenden Behörde vorkonfiguriert ist und selektiv nur mit diesem WLAN nach Authentifizierung des Operators Daten austauschen kann. Dies erhöht den Schutz der biometrischen Daten vor dem Auslesen durch unberechtigte Dritte.

Die entschlüsselten und signaturgeprüften biometrischen Daten BD des Terminals können daraufhin automatisch oder manuell an ein neues Sicherheitsdokument 116, das für den Nutzer 112 auf dessen Antrag hin ausgestellt werden soll, übertragen werden. Das fertige Dokument kann nun dem Nutzer 112 zugestellt werden, z.B. über den Postweg. Das speziell für den Nutzer 112 ausgestellte Sicherheitsdokument enthält also vertrauenswürdige und qualitativ hochwertige biometrische Daten (Gesichtsbild, Irisbild, Fingerabdruckdaten etc.) ohne dass der Nutzer hierfür Räumlichkeiten 102 der Behörde aufsuchen musste.

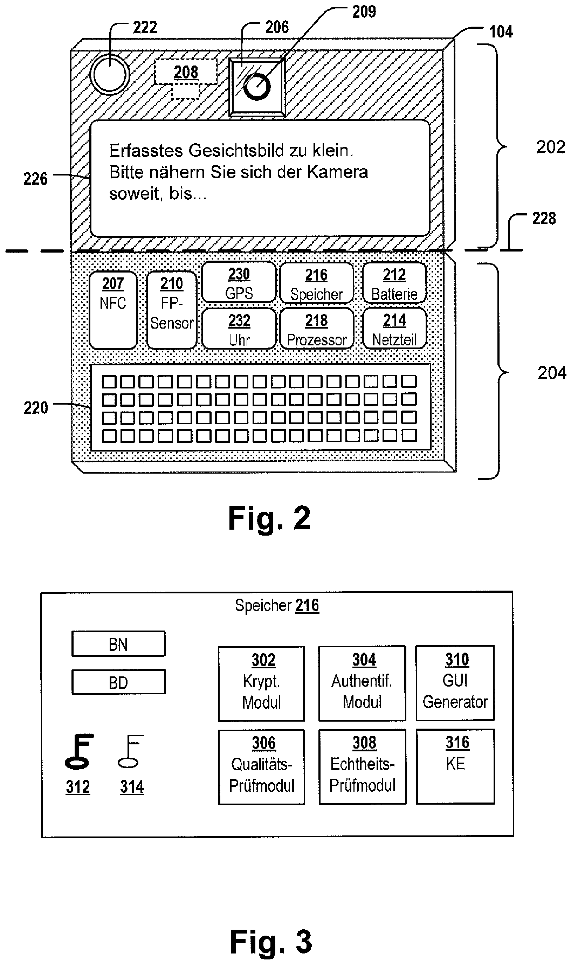

**Figur 2** zeigt ein aufgeklapptes, kofferförmiges mobiles Terminal 104 von vorne. Das Mobile Terminal besteht aus einem Deckelteil 202 und einem Bodenteil 204. Deckelteil und Bodenteil sind über eine Achse 228 gegeneinander verschwenkbar. Das Deckelteil beinhaltet ein Kamerasystem 208 und einem Lichteinlass 209, welcher durch einen semi-transparenten-Spiegel 206 überdeckt ist. Außerdem beinhaltet das Deckelteil eine Anzeige, die den Nutzer 112 durch den gesamten Prozess der Datenerfassung führt, Rückmeldung zu korrekter und/oder falscher Bedienung und/oder der Qualität der erfassten biometrischen Daten anzeigt und im anzeigt wie er bzw. sie das Gerät im nächsten Schritt bedienen muss. Zusätzlich zu der Anzeige 226 können auch weitere Elemente in den Deckelteil oder Bodenteil angebracht sein, die in der Lage sind, den Nutzer visuell oder akustisch zu signalisieren, was zu tun ist bzw. zu welchem Ergebnis die letzte von dem Nutzer vorgenommene Handlung geführt hat. Dazu können zum Beispiel LED-Elemente, Lautsprecher, oder dergleichen gehören.

Vorzugsweise im Bodenteil befinden sich schwere Bauteile, wie zum Beispiel eine Batterie 212 und/oder ein Netzteil 214 zum Anschluss des Terminals an eine externe Stromversorgung. Außerdem kann das Terminal einen Datenspeicher 216 zur Speicherung des Berechtigungsnachweises und der biometrischen Daten des Nutzers enthalten, eine Schnittstelle 207 zum Empfang von Authentifizierungsdaten von einem Sicherheitsdokument 114 des Nutzers, einen Sensor 210 zur Erfassung von Fingerabdruckdaten als den biometrischen Daten und einen oder mehrere Prozessoren 218, die das Zusammenspiel der besagten Elemente kontrollieren. Der Fingerabdrucksensor kann zum Beispiel als "Einfinger-Scanner", als "Zweifinger-Scanner" oder als "Vierfinger-Scanner" ausgebildet sein. Die Verwendung von 2-und mehr-Fingerscannern kann vorteilhaft sein, da dadurch sichergestellt wird, dass linke Finger als linke und rechte Finger als rechte Finger erfasst werden. Die Verwendung von Vierfinger-Scannern könnte vorteilhaft sein, da bei diesen sowohl die Unterscheidung links/rechts einfach möglich ist und außerdem auch bei unzureichender Qualität der Abdrücke der Zeigefinger ohne komplizierte Benutzerführung das Erfassen weiterer Finger nach Vorgabe der ICAO möglich ist.

Es ist möglich, dass sich auch eine Iris-Kamera mit eigenem Lichteinlass im Deckelteil befindet. Auch dieser Lichteinlass kann von einem semi-transparenten Spiegel überdeckt sein, dessen reflektierte Lichtkomponenten Feedback-Informationen bezüglich der richtigen Positionierung der Iris bereitstellen.

Zusätzlich kann das Terminal einen GPS Sensor 230 zur Erfassung der aktuellen Position des Terminals und/oder eine Uhr 232 zur Erfassung der aktuellen Zeit beinhalten. Außerdem kann das mobile Terminal 104 eine Nutzerschnittstelle, zum Beispiel eine Tastatur 220, beinhalten, welche es dem Nutzer erlaubt, beispielsweise seine beschreibende Daten (Name, Adresse, etc.) und/oder eine PIN zur Authentifizierung gegenüber seinem aktuell noch gültigen Sicherheitsdokument 114 manuell einzugeben. Die Tastatur kann auch als Touchscreen und damit als Teil der Anzeige 226 sein. Zudem kann das Terminal über ein Unterschriften-Pad verfügen, welches die Unterschrift des Nutzers als dessen biometrische Daten erfassen kann.

Eine Beleuchtungseinrichtung 222 kann in manchen Ausführungsformen ebenfalls in dem Deckelteil integriert sein. Vorzugsweise ist die Beleuchtungseinrichtung so stark, dass sie genügend Helligkeit für qualitativ hinreichend hochwertige Aufnahmen ermöglicht, auch dann, wenn sie die einzige Lichtquelle im Raum bildet. Dies kann vorteilhaft sein, da der Nutzer störende andere Lichtquellen, die z.B. zu ungewünschten Reflektionen führen, ausschalten kann.

**Figur 3** zeigt ein Blockdiagramm, welches den Inhalt des Datenspeichers 216 des Terminals nach einer Ausführungsform im Detail darstellt. Der Speicher kann verschiedene Module 302-310, 316 beinhalten, die Teile eines Softwareprogramms oder jeweils eigenständige Softwareprogramme darstellen können oder auch als Hardwarefunktionalität implementiert sein können.

Ein kryptographisches Modul 302 dient der Verschlüsselung der empfangenen biometrischen Daten BD, um diese Daten in verschlüsselter und damit in geschützter Form in dem Datenspeicher 216 zu speichern. Das Authentifizierungsmodul 304 führt diejenigen Schritte durch, die erforderlich sind, damit sich das mobile Terminal 104 gegenüber dem Nutzer 112 und/oder gegenüber dessen bisher noch gültigen Dokuments 114 authentifizieren kann. Außerdem prüft es die zweiten Authentifizierungsdaten AD2, die von dem Terminal im Zuge eines Authentifizierungsversuchs des Nutzers 112 gegenüber dem Terminal empfangen werden. Es kann sich dabei um die gleichen Daten AD1, AD2 handeln, die der Nutzer schon zur Authentifizierung gegenüber dem Server 108 verwendete. Das Qualitätsprüfungsmodul 306 kontrolliert die Qualität der erfassten biometrischen Daten. Falls die Prüfung ergibt, dass die biometrischen Daten nicht einem Mindest-Qualitätsniveau entsprechen, veranlasst das Modul 306 die Ausgabe eines entsprechenden Warnhinweises in Zusammenarbeit mit dem GUI-Generator Modul 310 über die Anzeigevorrichtung 226. Der Warnhinweis kann einen Hinweis darauf enthalten, welcher Umstand wahrscheinlich zu der schlechten Qualität der biometrischen Daten geführt hat und welche Maßnahmen der Nutzer ergreifen muss um bei einer erneuten Erfassung seiner biometrischen Daten deren Qualität zu erhöhen.

Das Echtheit-Prüfmodul 308 prüft, ob die erfassten biometrischen Daten BD des Nutzers auch echt sind. Die verwendeten Prüfverfahren sind dabei an die Art des verwendeten Sensors 208, 210 angepasst. Das Echtheits-Prüfmodul soll also einen möglichen Angriffe mit künstlichen oder gefälschten biometrischen Merkmalen erkennen und abwehren. Die technischen Verfahren hierzu sind je nach Biometrie unterschiedlich. Vorzugsweise kann das Echtheit-Prüfmodul ein oder mehrere Verfahren zur Lebenderkennung implementieren, d. h., das Modul prüft, ob das angebotene biometrische Merkmal zu einem lebenden Menschen gehört. Zu den von dem Echtheits-Prüfmodul implementierten Verfahren können beispielsweise folgende, hier nur exemplarisch genannte, Prüfverfahren gehören:
- Verfahren zur 3D-Gesichtserkennung um Betrugsversuche mit einem Foto zu abzuwehren;
- Verfahren zur 2D-Gesichtserkennung, das auf individuellen Augenbewegungen beruht. Die zu erkennende Person wird über die Anzeigevorrichtung 226 aufgefordert, einen Punkt auf der Anzeige 226 zu verfolgen. Mit der Kamera und einer entsprechenden Auswertungssoftware wird die Augenbewegung verfolgt und analysiert. Betrugsversuche durch ein Bild können somit unterbunden werden;

- Analyse der in einem Foto einer Iris sichtbaren Beleuchtungspunkte in ihrer Abgrenzung. Diese ist signifikant unterschiedlich auf einer feuchten, gebogenen Fläche eines lebenden Auges zu der Oberfläche eines 2-D Fotos; Bei der Iriserkennung (Augensignatur) kann somit ein Betrugsversuch anhand eines Fotos erkannt werden;
- Für den Fingerabdrucksensor: Erfassung zusätzlicher Merkmale wie Hautwiderstand und Temperatur zur Lebenderkennung; Pulsmessungen über Infrarotsensoren oder Kombinationen optischer Verfahren, die im Bereich sichtbaren oder infraroten Lichts den Finger durchleuchten und das reflektierte oder transmittierte Licht analysieren.

Eine Kontrolleinheit 316 koordiniert das Zusammenspiel der verschiedenen Module 302-308, 310 und der entsprechenden Hardwarekomponenten 208, 222, 230, 232, 207. Das GUI-Generator-Modul 310 steuert den Inhalt der Anzeige 226 in Abhängigkeit von Anweisungen durch die Kontrolleinheit 316. Das kryptographische Modul 302 verschlüsselt die biometrischen Daten BD mit dem öffentlichen Verschlüsselungsschlüssel 312 und signiert sie mit dem privaten Signaturschlüssel 314, die in dem Datenspeicher 216 des Terminals gespeichert sind.

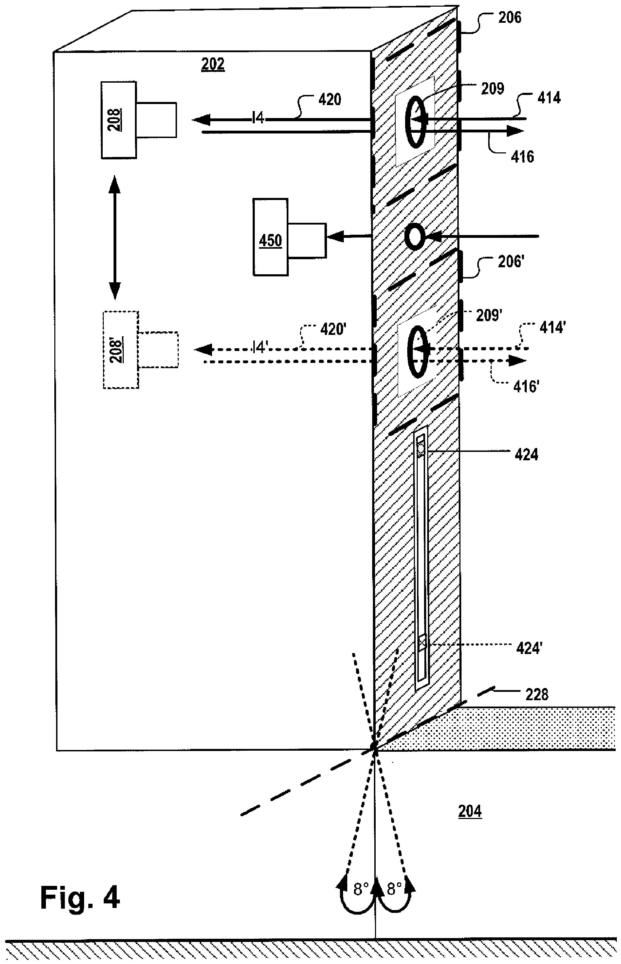

**Figur 4** zeigt ein aufgeklapptes, mobiles Terminal von der Seite. Das Deckelteil 202 ist über eine Achse 228 gegen das Bodenteil 204 um bis zu 8° gegenüber einer Normalen auf die Oberfläche des Bodenteils verschwenkbar. Vorzugsweise verharrt das Deckelteil in einer durch den Nutzer manuell eingestellten bzw. verschwenkten Position. Dies kann zum Beispiel dadurch unterbunden werden, dass eine Relativbewegung der gegeneinander verschwenkbaren Komponenten Bodenteil und Deckelteil durch eine hinreichend hohe mechanische Reibung verhindert wird. Erst durch zusätzliche manuelle Krafteinwirkung des Nutzers wird eine Relativbewegung dieser Komponenten bewirkt. Vorzugsweise ist ein Verschwenken über die in Figur 4 angezeigten 8° hinaus unmöglich oder zumindest mechanisch erschwert, der Nutzer müsste also deutlich mehr Kraft aufwenden um das Deckelteil um mehr als 8° zu verschwenken. Dies kann verhindern, dass der Nutzer durch zu starke Verschwenkung des Deckelteils mit der Kamera 208 perspektivisch verzerrte Gesichtsaufnahmen anfertigt, die regelmäßig nicht die zum Beispiel für Passbilder erforderliche Mindestqualität aufweisen.

Das Terminal kann mechanische Positionierungsmittel 424 beinhalten, die an das Kamerasystem 208, den semitransparenten Spiegel 206 und den Lichteinlass 209 gekoppelt sind und die es dem Nutzer ermöglichen, durch Verschieben der Positionierungsmittel 424 die Höhe des Kamerasystems, des entsprechenden Lichteinlasses und des semitransparenten Spiegels zu verstellen und seiner Körpergröße anzupassen. Dies ist durch die gestrichelte Kopie des Kamerasystems 208' und des Lichteinlasses 209' angedeutet. Zwar sitzt der Nutzer 112 vorzugsweise auf einem Stuhl, der vor einer Tischplatte steht, auf welchem wiederum das aufgeklappte Terminal aufgestellt wurde. Größenunterschiede zwischen Menschen fallen deshalb nicht so stark ins Gewicht wie bei der Aufnahme von Bildern stehender Personen. Dennoch kann die mechanische Verschiebbarkeit des Kamerasystems 208 und des entsprechenden Lichteinlasses 209 helfen, die Position der Kamera auf die unterschiedlichen Oberkörpergrößen von Personen anzupassen. Nach manchen Ausführungsformen kann das mobile Terminal auch eine Weitwinkelkamera 450 beinhalten. Diese macht zunächst Weitwinkelaufnahmen, die von dem Terminal 104 einer Bildanalyse unterzogen werden, um die ungefähre Position des Gesichts der Person zu ermitteln, zum Beispiel mittels Gesichtserkennung und Bestimmung der Größe des Gesichtes innerhalb des Gesamtbildes der Weitwinkelaufnahmen. Anhand der so ermittelten Position des Gesichts kann das Kamera System 208 und der an das Kamerasystem gekoppelte Lichteinlass 209 nun automatisch vertikal so verschoben werden, dass sich der Lichteinlass 209 möglichst auf gleicher Höhe wie das Gesicht des Nutzers befindet. Außerdem kann ein optischer oder mechanischer Zoom-Mechanismus des Kamerasystems 208 aktiviert werden, welcher bewirkt, dass das Gesicht in der erforderlichen Größe und Auflösung erfasst wird.

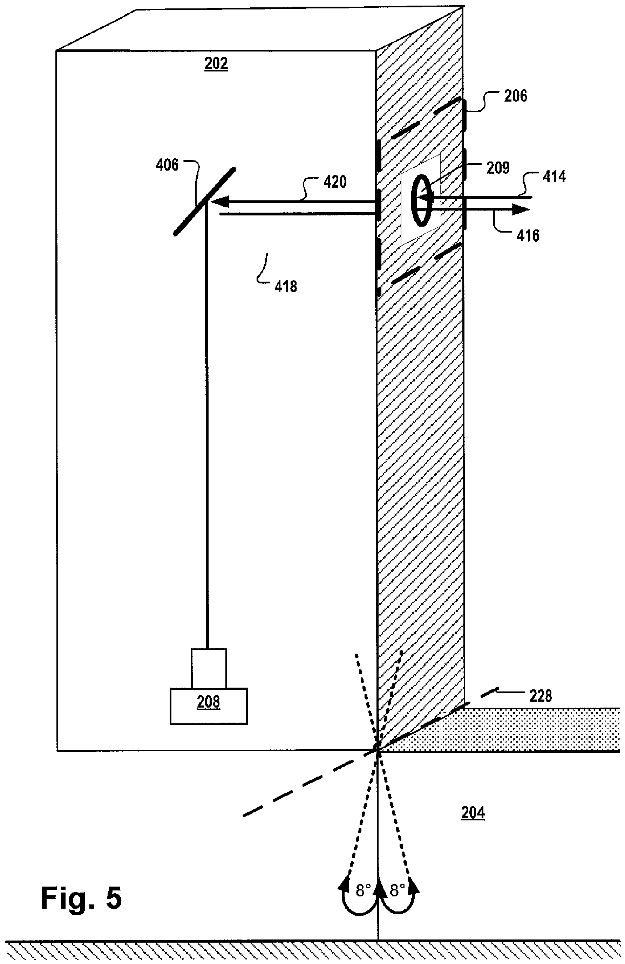

**Figur 5** zeigt ein weiteres aufgeklapptes, mobiles Terminal von der Seite. Das Kamerasystem 208 ist hier im unteren Teil des aufgeklappten Deckelteils angebracht.

Das durch den Lichteinlass 209 und den semi-transparenten-Spiegel 206 transmittierte Licht 420, welches im wesentlichen parallel zur Bodenfläche des Terminals in den Lichteinlass 209 einfällt, wird durch eine Spiegelanordnung 406 so abgelenkt, dass es von dem Kamerasystem 208 erfasst wird. Diese Anordnung kann vorteilhaft sein, weil es eine flachere Bauweise des Deckelteils und damit eine insgesamt kompaktere Bauweise des mobilen Terminals 104 erlaubt.

Nach manchen Ausführungsformen sind die Spiegelanordnung 406, der Lichteinlass 209 und der semitransparente Spiegel mechanisch aneinander gekoppelt und als Gesamtheit vertikal verschiebbar und damit an verschiedene (Oberkörper)größen anpassbar. Eine Weitwinkelkamera 450 (nicht dargestellt) kann analog zu der in Fig. 4 beschriebenen Ausführungsform zur automatischen Positionierung der Spiegelanordnung, des Lichteinlasses 209 und des semitransparenten Spiegels dienen.

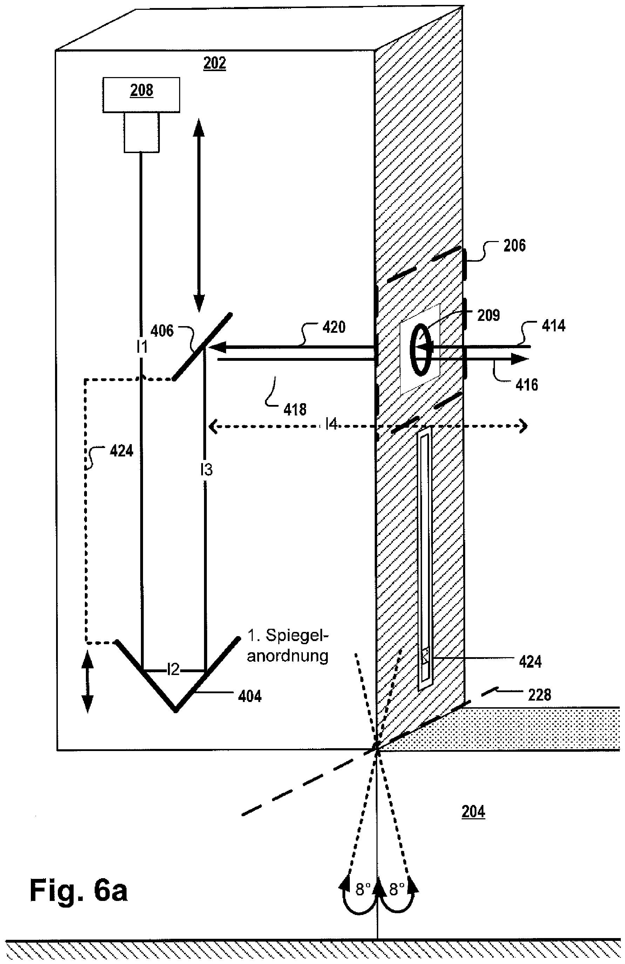

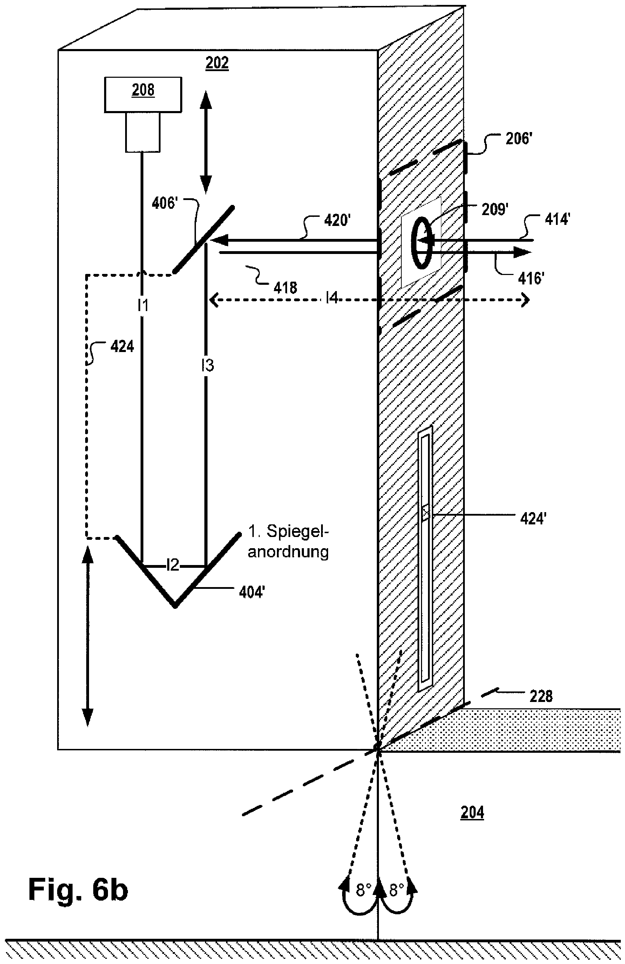

**Figur 6** zeigt einen Querschnitt eines aufgeklappten, mobilen Terminals einer weiteren Ausführungsform von der Seite. Auch diese Ausführungsform kann eine flache Bauweise des Deckelteils und damit eine kompakte Bauweise des Terminals ermöglichen.

**Figur 6a** zeigt das Deckelteil beinhaltend eine erste Spiegelanordnung 404 und eine zweite Spiegelanordnung 406 vor einer Verschiebung der ersten und zweiten Spiegelanordnung. **Figur 6b** zeigt das besagte Deckelteil nach der Verschiebung.

Die in Fig. 6a dargestellte Situation könnte der Ausgangssituation entsprechen, also der Situation, wenn der Nutzer das Terminal aufklappt und einschaltet. In dieser Position der beiden Spiegelanordnungen 404, 406, des Lichteinlasses 209 und des semitransparenten Spiegels 206 können Personen, deren Nasenspitze sich ca. 60 cm über der Tischplatte befindet, auf welcher das aufgeklappte Terminal steht, so aufgenommen werden, dass die vom Gesicht aufgenommenen Lichtstrahlen den Lichteinlass annähernd parallel zur Tischplatte passieren.

Beispielsweise kann der Abstand des Gesichts der Person von der zweiten Spiegelanordnung 406 konstant eine Länge I4 betragen. Der optische Pfad zwischen der ersten Spiegelanordnung 404 und dem Kamerasystem 208 kann eine Länge I1 haben. Der optische Weg zwischen den beiden Hälften der ersten Spiegelanordnung wird als I2, der optische Weg zwischen der ersten und der zweiten Spiegelanordnung als I3 bezeichnet.

Der optische Pfad I1+I2+I3+I4 zwischen Kamera und Gesicht der Person könnte z.B. 70cm-250cm, vorzugsweise 100cm - 120 cm betragen und konstant bleiben wenn sich die beiden Spiegelanordnungen verschieben. Auch der in Fig. 6b dargestellte optische Pfad zwischen Kamera und Gesicht der Person würden demnach 70cm-250cm, vorzugsweise 100cm - 120 cm betragen.

Die in Fig. 6a dargestellten Maße, die sich z.B. zu 120 cm aufaddieren, können etwa betragen: I1= 50 cm; I2= 10 cm; I3= 20 cm; I4= 40 cm. In dieser Konfiguration könnte sich der Lichteinlass 209 und der an den Lichteinlass gekoppelte semitransparente Spiegel oder die zweite Spiegelanordnung auf einer bestimmten Höhe (vertikalen Position) in Bezug auf den aufgeklappten Deckelteil befinden. Diese Position kann z.B. zu tief sein, um das Gesicht einer großen Person richtig zu erfassen. Durch relative Verschiebung der ersten und zweiten Spiegelanordnung sowie des Lichteinlasses und des semitransparenten Spiegels kann die Gesamtkonfiguration des Strahlengangs aussehen wie in Fig. 6b dargestellt. Hier kann nun auch das Gesicht einer großen Person erfasst werden. Die vertikale Verschiebung kann durch Betätigung der Positionierungsmittel 424, z.B. eines mechanischen Verschiebeknopfes, oder automatisch erfolgen.

Die in Fig. 6b dargestellten Maße, die sich ebenfalls zu einer Gesamtlänge des Strahlengangs von 120 cm aufaddieren, können etwa betragen: I1= 40 cm; I2= 10 cm; I3= 30 cm; I4= 40 cm. Da die Gesamtstrahlengänge in Fig. 6a und 6b gleich lang sind wird auch das Gesicht des Nutzers in 6a und 6b in gleicher Auflösung bzw. Größe erfasst.

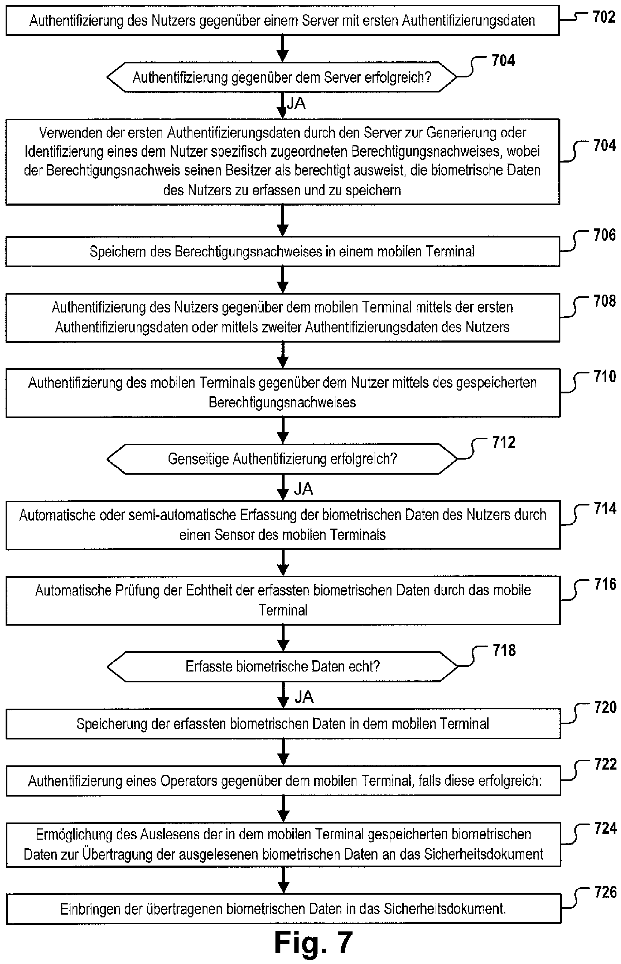

**Figur 7** zeigt ein Flussdiagram für ein Verfahren nach einer Ausführungsform. In einem ersten Schritt 702 authentifiziert sich der Nutzer 112 gegenüber einem Server 109 mit ersten Authentifizierungsdaten AD1, z.B. im Zuge des Ausfüllens eines elektronischen Antragsformulars zur Zusendung eines mobilen Terminals. Die Authentifizierungsdaten können zum Beispiel aus einem noch gültigen weiteren Ausweisdokument 114 ausgelesen werden. Nach erfolgreicher Authentifizierung gegenüber dem Server verwendet der Server in Schritt 704 die ersten Authentifizierungsdaten zur Generierung oder Identifizierung eines dem Nutzer spezifisch zugeordneten Berechtigungsnachweises BN. In Schritt 706 wird der Berechtigungsnachweis in einem mobilen Terminal 104 gespeichert. In Schritt 708 authentifiziert sich der Nutzer gegenüber dem mobilen Terminal mittels der ersten Authentifizierungsdaten oder mittels anderer ("zweiter") Authentifizierungsdaten. In Schritt 710 authentifiziert sich das mobile Terminal gegenüber dem Nutzer mittels des gespeicherten Berechtigungsnachweises und weist dadurch nach, dass es von einem vertrauenswürdigen Dokumentenaussteller stammt und zur Erfassung der biometrischen Daten berechtigt ist.

Falls in Schritt 712 das Terminal feststellt, dass sich Terminal und der Nutzer erfolgreich gegenseitig authentifiziert haben, erfasst das Terminal in Schritt 714 automatisch oder semi-automatisch ein oder mehrere Datensätze von biometrischen Daten BD des Nutzers. Die biometrischen Daten können von nur einem Sensor kommen, z.B. einer Kamera zur Aufnahme eines Gesichtsbildes, oder von mehreren Sensoren, z.B. von der Kamera und einem Fingerabdrucksensor. In Schritt 716 prüft das mobile Terminal, ob die erfassten biometrischen Daten echt sind. In Schritt 720 speichert das Terminal die erfassten biometrischen Daten in geschützter Form, falls die Echtheit der Daten in Schritt 718 festgestellt wurde. In Schritt 720 erfolgt die Speicherung der erfassten biometrischen Daten in dem Terminal. Nach Authentifizierung eines Operators in Schritt 722 gegenüber dem Terminal, ermöglicht dieses ein Auslesen der geschützt gespeicherten biometrischen Daten BD des Nutzers in Schritt 724, um die ausgelesenen biometrischen Daten in Schritt 724 an ein neues Sicherheitsdokument zu übertragen und in dieses einzubringen. Dadurch kann das neue Sicherheitsdokument mit vertrauenswürdigen biometrischen Daten des Nutzers versehen und damit personalisiert werden.

### Bezugszeichenliste

- 102: Räumlichkeiten des Dokumentenausstellers
- 104: mobiles Terminal
- 108: Operator
- 109: Server
- 110: Nutzer-Computersystem
- 112: Nutzer
- 114: weiteres Sicherheitsdokument
- 116: auszustellendes Sicherheitsdokument
- 118: Wohnungsnutzer
- 122: Netzwerk
- 124: privater Schlüssel zur Entschlüsselung
- 126: öffentlicher Signaturprüfschlüssel
- BN: Berechtigungsnachweise
- BD: biometrische Daten
- AD1: erste Authentifizierungsdaten
- AD2: zweite Authentifizierungsdaten
- AD3: dritte Authentifizierungsdaten
- 202: Deckelteil
- 204: Bodenteil
- 206: semi-transparenter Spiegel
- 207: NFC Schnittstelle
- 208: Kamerasystem
- 209: Lichteinlass
- 210: Fingerabdruck-Sensor
- 212: Batterie
- 214: Netzteil
- 216: Datenspeicher
- 218: Prozessor
- 220: Tastatur/Dateneingabe-Schnittstelle
- 222: Beleuchtungseinrichtung
- 226: Anzeigenelement
- 230: GPS Modul
- 232: Uhr
- 302: kryptographisches Modul
- 304: Authentifizierungseinheit
- 306: Modul zur Qualitätsprüfung
- 308: Modul zur Echtheitsprüfung
- 310: GUI Generator
- 312: öffentlicher Verschlüsselungs-Schlüssel
- 314: privater Signatur-Schlüssel
- 316: Kontrolleinheit
- 404: erste Spiegelanordnung
- 406: zweite Spiegelanordnung
- 414: einfallendes Licht (in Lichteinlass)
- 416: Strahlengang des vom semi-transparenten Spiegel reflektierten Teil des Lichts
- 418: von Nutzer abgewandte Seiten des Spiegels
- 420: Strahlengang des durch den semi-transparentenSpiegel 209 transmittierten Lichts
- 424: Bedienelement zur vertikalen Verschiebung von Lichteinlass 209 und Kamera System 208
- 450: Weitwinkel-Kamerasystem
- I1-I4: Strahlengänge
- 702-726: Schritte

## Patentansprüche

1. Mobiles Terminal (104) in Gestalt eines Koffers zum Erfassen von biometrischen Daten (BD) eines Nutzers (112), umfassend:
- einen Datenspeicher (216) der einen dem Nutzer spezifisch zugeordneten Berechtigungsnachweis (BN) enthält, wobei der Berechtigungsnachweis das mobile Terminal als berechtigt ausweist, die biometrischen Daten des Nutzers zu erfassen und zu speichern;
- ein Authentifizierungsmodul (304) zur Authentifizierung des Nutzers gegenüber dem mobilen Terminal mittels dem Nutzer zugeordneter Authentifizierungsdaten (AD2) und zur Authentifizierung des mobilen Terminals gegenüber dem Nutzer mittels des gespeicherten Berechtigungsnachweises (BN);
- einen Sensor (208, 210) zur Erfassung biometrischer Daten des Nutzers, wobei der Sensor ein Kamerasystem (208) umfasst;
- eine Kontrolleinheit (316), die dazu konfiguriert ist, nur bei gegenseitiger erfolgreicher Authentifizierung des Nutzers und des mobilen Terminals die biometrischen Daten (BD) des Nutzers mittels des Sensors automatisch oder semi-automatisch zu erfassen;
- eine Prüfeinheit (308) zur automatischen Prüfung der Echtheit der erfassten biometrischen Daten;
- zumindest einen Tragegriff, ein Bodenteil (204) und ein Deckelteil (202) wobei das Kamerasystem (208) auf der Innenseite des Deckelteils angebracht ist, wobei das Deckelteil zusätzlich zu dem Kamerasystem (208) einen semitransparenten Spiegel (206) umfasst;
- wobei die Kontrolleinheit dazu konfiguriert ist die erfassten biometrischen Daten nur dann in dem Datenspeicher (216) in geschützter Form zu speichern, wenn die erfassten biometrischen Daten gemäß der Prüfung echt sind;
- wobei das Authentifizierungsmodul (304) zur Authentifizierung eines Operators (106) gegenüber dem mobilen Terminal mittels weiterer Authentifizierungsdaten (AD3), die dem Operator zugeordnet sind, konfiguriert ist;
- wobei die Kontrolleinheit dazu konfiguriert ist, nur im Falle einer erfolgreichen Authentifizierung des Operators ein Auslesen der geschützt gespeicherten biometrischen Daten zu ermöglichen um die ausgelesenen biometrischen Daten an ein Sicherheitsdokument (116) zu übertragen;
- wobei der semitransparente Spiegel automatisch und/oder manuell so ausrichtbar ist, dass der semitransparente Spiegel zwischen dem Nutzer und dem Kamerasystem positioniert ist, wobei der semitransparente Spiegel so ausgerichtet ist, dass auf der dem Nutzer zugewandten Seite des semitransparenten Spiegels der Strahlengang (414) von auf den semitransparenten Spiegel einfallenden Lichts parallel ist zum Strahlengang (416) des vom semitransparenten Spiegel zurück reflektierten Teil dieses Lichts; und
- ferner mit einer ersten (404) und einer zweiten (406) Spiegelanordnung, die an der von der Person abgewandten Seite (418) des semi-transparenten Spiegels (206) so angeordnet sind, dass der auf die zweite Spiegelanordnung (406) fallende durch den semi-transparenten Spiegel (206) transmittierte Teil (420) des Lichts durch die zweite Spiegelanordnung auf die erste Spiegelanordnung (404) gelenkt wird, wobei die erste Spiegelanordnung (404) so angeordnet ist, dass dieser auf die erste Spiegelanordnung (404) gelenkte transmittierte Teil des Lichts auf das Kamerasystem (208) reflektiert wird, wobei die Position eines Lichteinlasses (209) für das Kamerasystem (208) an die Position des semi-transparenten Spiegels gekoppelt ist.

2. Mobiles Terminal (104) nach Anspruch 1, wobei der Sensor (208, 210) besteht aus:
- ein Kamerasystem zum Erfassen von Bilddaten eines Gesichts und/oder einer Iris des Nutzers (112) als den biometrischen Daten; oder
- einem Fingerabdrucksensor zum Erfassen von Fingerabdruckdaten des Nutzers als den biometrischen Daten; oder
- einem Sensor für Handvenenmuster; oder
- einem Sensor für Retinamuster; oder
- einem Sensor für Nagelbettmuster; oder
- ein Unterschriftenpad; oder
- ein Mikrofon zur Erfassung eines Stimmprofils; oder
- einer Kombination aus zwei oder mehr der besagten Sensoren.

3. Mobiles Terminal (104) nach einem der vorigen Ansprüche, mit:
- einem Qualitäts-Prüfmodul (306) zur automatischen Prüfung der Qualität der erfassten biometrischen Daten, wobei die Speicherung der erfassten biometrischen Daten in dem mobilen Terminal nur erfolgt, wenn die erfassten biometrischen Daten zudem vordefinierte Qualitätsmindestanforderungen erfüllen.

4. Mobiles Terminal (104) nach einem der vorigen Ansprüche,
- wobei der Sensor einen Fingerabdrucksensor (210) umfasst, der auf der Innenseite des Bodenteils angebracht ist; und/oder
- wobei das Deckelteil auf seiner Innenseite eine Anzeigevorrichtung (226) aufweist zur Anzeige von Bedienhinweisen an den Nutzer während der Erfassung der biometrischen Daten.

5. Mobiles Terminal (104) nach einem der vorigen Ansprüche, wobei die erste Spiegelanordnung (404) und/oder die zweite Spiegelanordnung (406) parallel verschiebbar ist zum Strahlengang (I3) des vom semi-transparenten Spiegel (206) transmittierten Teils des Lichts zwischen der ersten Spiegelanordnung und der zweiten Spiegelanordnung.

6. Mobiles Terminal (104) nach einem der vorigen Ansprüche, wobei die erste Spiegelanordnung (404) und die zweite Spiegelanordnung (406) eine erste Kopplung aufweisen, wobei die erste Kopplung so beschaffen ist, dass sie automatisch bei der Verschiebung der zweiten Spiegelanordnung (406) die erste Spiegelanordnung (404) so verschiebt, dass der optische Abstand zwischen der zweiten Spiegelanordnung (406) und einem Lichteinlass (209) des Kamerasystems (208) konstant bleibt.

7. Mobiles Terminal (104) nach einem der vorigen Ansprüche, wobei die erste Spiegelanordnung (404) bei konstanter Position der zweiten Spiegelanordnung (406) automatisch so verschiebbar ist, dass
- der optische Abstand zwischen dem Gesicht des Nutzers (112) und dem Lichteinlass (209) des Kamerasystems (208) einem vorgegebenen Wert entspricht und/oder
- die Größe des durch das Kamerasystem (208) erfassten Gesichtsbildes und/oder Irisbildes des Nutzers zur Erfassung der biometrischen Daten (BD) einem vorgegeben Wert entspricht.

8. Mobiles Terminal (104) nach einem der vorigen Ansprüche , ferner mit einer Beleuchtungseinrichtung (222) zur Beleuchtung des Nutzers (112), wobei die Beleuchtungseinrichtung (222) und die erste Spiegelanordnung (404) eine zweite Kopplung aufweisen, wobei die zweite Kopplung so beschaffen ist, dass sie automatisch bei der Verschiebung der ersten Spiegelanordnung (404) das Leuchtverhalten der Beleuchtungseinrichtung (222) steuert, wobei vorzugsweise das Kamerasystem und die Beleuchtungseinrichtung (222) Bestandteil des Deckelteils (202) sind.

9. Mobiles Terminal (104) nach einem der vorigen Ansprüche, ferner mit:
- einem Sensor zur Messung der Umgebungshelligkeit; und
- einer Kalibriereinheit zur automatischen Einstellung der Beleuchtungsstärkte der Beleuchtungseinrichtung und/oder zur automatischen Einstellung der Lichtempfindlichkeit des Kamerasystems in Abhängigkeit von der gemessenen Umgebungshelligkeit.

10. Mobiles Terminal (104) nach einem der vorigen Ansprüche, ferner mit:
- einer Lokalisierungseinheit (230) die dazu konfiguriert ist, eine aktuelle Position des mobilen Terminals während der Erfassung der biometrischen Daten zu erfassen;
- wobei der Datenspeicher eine geographische Gebietsangabe enthält;
- wobei die Speicherung der erfassten biometrischen Daten in dem mobilen Terminal nur erfolgt, wenn die bei der Erfassung der biometrischen Daten erfasste aktuelle Position sich innerhalb der geographischen Gebietsangabe befindet.

11. Mobiles Terminal (104) nach einem der vorigen Ansprüche, ferner mit:
- einer Uhr (232) die eine aktuelle Uhrzeit während der Erfassung der biometrischen Daten erfasst;
- wobei der Datenspeicher eine Angabe eines zulässigen Zeitraums enthält;
- wobei die Speicherung der erfassten biometrischen Daten in dem mobilen Terminal nur erfolgt, wenn die bei der Erfassung der biometrischen Daten erfasste aktuelle Uhrzeit sich innerhalb des zulässigen Zeitraums befindet.

12. Verfahren zum Einbringen von biometrischen Daten (BD) eines Nutzers (112) in ein Sicherheitsdokument (116), umfassend:
- Authentifizierung (702) des Nutzers gegenüber einem Server (109) mit ersten Authentifizierungsdaten (AD1);
- Nach erfolgreicher Authentifizierung gegenüber dem Server, verwenden der ersten Authentifizierungsdaten durch den Server zur Generierung oder Identifizierung eines dem Nutzer spezifisch zugeordneten Berechtigungsnachweises (BN), wobei der Berechtigungsnachweis seinen Besitzer als berechtigt ausweist, die biometrische Daten des Nutzers zu erfassen und zu speichern;
- Speichern des Berechtigungsnachweises in einem mobilen Terminal (104) nach einem der Ansprüche 1-11, wobei das mobile Terminal zumindest einen Sensor (208, 210) umfasst;
- Authentifizierung des Nutzers gegenüber dem mobilen Terminal mittels der ersten Authentifizierungsdaten oder mittels zweiter Authentifizierungsdaten (AD2) des Nutzers;
- Authentifizierung des mobilen Terminals gegenüber dem Nutzer mittels des gespeicherten Berechtigungsnachweises;
- nur bei gegenseitiger erfolgreicher Authentifizierung: automatische oder semi-automatische Erfassung der biometrischen Daten (BD) des Nutzers durch den Sensor des mobilen Terminals, wobei die Erfassung der biometrischen Daten eine automatische und/oder manuelle Ausrichtung des semitransparenten Spiegels so, dass der semitransparente Spiegel zwischen dem Nutzer und dem Kamerasystem positioniert ist, umfasst;
- automatische Prüfung der Echtheit der erfassten biometrischen Daten durch das mobile Terminal;
- nur im Falle einer festgestellten Echtheit der erfassten biometrischen Daten, Speicherung der erfassten biometrischen Daten in dem mobilen Terminal in geschützter Form;
- Authentifizierung eines Operators (106) mittels dritter Authentifizierungsdaten (AD3), die dem Operator zugeordnet sind, gegenüber dem mobilen Terminal;
- nur im Falle einer erfolgreichen Authentifizierung des Operators, Ermöglichung des Auslesens der in dem mobilen Terminal gespeicherten biometrischen Daten zur Übertragung der ausgelesenen biometrischen Daten an das Sicherheitsdokument; und
- Einbringen der übertragenen biometrischen Daten in das Sicherheitsdokument.

13. Verfahren nach Anspruch 12, wobei die Authentifizierung des Nutzers gegenüber dem mobilen Terminal umfasst:
- Durchführung eines BAC-Protokolls und/oder eines EAC-Protokolls und/oder eines PACE-Protokolls und/oder eines SAC-Protokolls zwischen dem mobilen Terminal und dem weiteren Sicherheitsdokument (114) und/oder
- Vergleich eines vom Nutzer in das mobile Terminal eingegebenen und/oder durch das mobile Terminal von einem weiteren Sicherheitsdokument (114) des Nutzers ausgelesenen Datenwertes mit einem in dem mobilen Terminal gespeicherten Referenzwertes.

14. Verfahren nach einem der Ansprüche 12-13, wobei das weitere Sicherheitsdokument (114) biometrische Referenzdaten des Nutzers (112) gespeichert hat, wobei die automatische Prüfung der Echtheit der erfassten biometrischen Daten durch das mobile Terminal umfasst:
- Auslesen der biometrischen Referenzdaten von dem weiteren Sicherheitsdokument durch das mobile Terminal;
- Vergleich der ausgelesenen biometrischen Referenzdaten mit den erfassten biometrischen Daten des Nutzers (112);
- Falls die erfassten biometrischen Daten mehr als einen vordefinierten Maximalwert von den biometrischen Referenzdaten abweichen, Rückgabe eines Ergebnisses, dass die ermittelten biometrischen Daten nicht echt sind.
- Authentifizierung des Nutzers (112) gegenüber dem weiteren Sicherheitsdokument (104) durch Eingabe einer PIN über eine Dateneingabeschnittstelle (220) des mobilen Terminals;
- Nach erfolgreicher Authentifizierung gegenüber dem weiteren Sicherheitsdokument, Übertragung des Sicherheitsdokument-Identifikators an das mobile Terminal, wobei der Sicherheitsdokument-Identifikator als die zweiten Authentifizierungsdaten fungiert;
- Vergleich des übertragenen Sicherheitsdokument-Identifikators mit dem gespeicherten Referenzwert durch das mobile Terminal zur Authentifizierung des Nutzers gegenüber dem mobilen Terminal.

## Claims

1. A mobile terminal (104) in the shape of a suitcase for capturing biometric data (BD) of a user (112), comprising:
- a data storage unit (216) containing a credential (C) that is specifically assigned to the user, wherein the credential identifies the mobile terminal as being authorized to capture and store the biometric data of the user;
- an authentication module (304) for authenticating the user with respect to the mobile terminal by means of authentication data (AD2) assigned to the user and for authenticating the mobile terminal with respect to the user by means of the stored credential (C);
- a sensor (208, 210) for capturing biometric data of the user, wherein the sensor comprises a camera system (208);
- a control unit (316), which is configured to capture the biometric data (BD) of the user automatically or semi-automatically by means of the sensor only upon reciprocal successful authentication of the user and the mobile terminal;
- a test unit (308) for automatically testing the authenticity of the captured biometric data;
- at least one carrying handle, a bottom part (204) and a cover part (202), wherein the camera system (208) is attached to the inside of the cover part, wherein the cover part comprises a semitransparent mirror (206), in addition to the camera system (208);
- wherein the control unit is configured to store the captured biometric data in the data storage unit (216) in protected form only when the captured biometric data is authentic according to the test;
- wherein the authentication module (304) is configured to authenticate an operator (106) with respect to the mobile terminal by means of additional authentication data (AD3) assigned to the operator;
- wherein the control unit is configured to enable a readout of the biometric data stored in a protected manner only in the case of a successful authentication of the operator so as to transmit the read-out biometric data to a security document (116);
- wherein the semi-transparent mirror can be aligned automatically and/or manually in such a way that the semi-transparent mirror is positioned between the user and the camera system, wherein the semi-transparent mirror is aligned in such a way that, on the side of the semi-transparent mirror facing the user, the optical path (414) of light incident upon the semi-transparent mirror is parallel to the optical path (416) of the portion of this light reflected back by the semi-transparent mirror; and
- furthermore comprising a first (404) and a second (406) mirror system, which are arranged on the side (418) of the semi-transparent mirror (206) facing away from the person in such a way that the portion (420) of the light which is incident upon the second mirror system (406) and transmitted by the semi-transparent mirror (206) is directed onto the first mirror system (404) by the second mirror system, wherein the first mirror system (404) is arranged in such a way that this transmitted portion of the light which is directed onto the first mirror system (404) is reflected onto the camera system (208), wherein the position of a light inlet (209) for the camera system (208) is coupled to the position of the semi-transparent mirror.

2. The mobile terminal (104) according to claim 1, wherein the sensor (208, 201) comprises:
- a camera system for capturing image data of a face and/or an iris of the user (112) as the biometric data; or
- a fingerprint sensor for capturing fingerprint data of the user as the biometric data; or
- a sensor for vein patterns in the hand; or
- a sensor for retina patterns; or
- a sensor for nail bed patterns; or
- a signature pad; or
- a microphone for capturing a voice profile; or
- a combination consisting of two or more of said sensors.

3. The mobile terminal (104) according to any one of the preceding claims, comprising:
- a quality test module (306) for automatically testing the quality of the captured biometric data, wherein the captured biometric data is only stored in the mobile terminal when the captured biometric data also meets predefined minimum quality requirements.

4. The mobile terminal (104) according to any one of the preceding claims,
- wherein the sensor comprises a fingerprint sensor (210), which is provided on the inside of the bottom part; and/or
- wherein the cover part includes a display device (226) on the inside thereof for displaying operating instructions to the user while the biometric data is being captured.

5. The mobile terminal (104) according to any one of the preceding claims, wherein the first mirror system (404) and/or the second mirror system (406) can be displaced parallel to the optical path (I3) of the portion of the light that is transmitted by the semi-transparent mirror (206) between the first mirror system and the second mirror system.

6. The mobile terminal (104) according to any one of the preceding claims, wherein the first mirror system (404) and the second mirror system (406) have a first coupling, wherein the first coupling is designed so as to automatically displace the first mirror system (404), upon the displacement of the second mirror system (406), in such a way that the optical distance between the second mirror system (406) and a light inlet (209) of the camera system (208) remains constant.

7. The mobile terminal (104) according to any one of the preceding claims, wherein the first mirror system (404), at a constant position of the second mirror system (406), can be automatically displaced in such a way that
- the optical distance between the face of the user (112) and the light inlet (209) of the camera system (208) corresponds to a predefined value and/or
- the size of the facial image and/or the iris image of the user captured by the camera system (208) corresponds to a predefined value for capturing the biometric data (BD).

8. The mobile terminal (104) according to any one of the preceding claims, furthermore including an illumination device (222) for illuminating the user (112), wherein the illumination device (222) and the first mirror system (404) have a second coupling, wherein the second coupling is designed so as to automatically control the illumination behavior of the illumination device (222) upon the displacement of the first mirror system (404), wherein the camera system and the illumination device (222) are preferably part of the cover part (202).

9. The mobile terminal (104) according to any one of the preceding claims, furthermore comprising:
- a sensor for measuring the ambient brightness; and
- a calibration unit for automatically setting the illumination intensity of the illumination device and/or for automatically setting the light sensitivity of the camera system as a function on the measured ambient brightness.

10. The mobile terminal (104) according to any one of the preceding claims, furthermore comprising:
- a localization unit (230), which is configured to capture a current position of the mobile terminal while the biometric data is being captured;
- wherein the data storage unit contains geographic territory information;
- wherein the captured biometric data is only stored in the mobile terminal when the current position which is captured during the capturing of the biometric data is located within the geographic territory information.

11. The mobile terminal (104) according to any one of the preceding claims, furthermore comprising:
- a clock (232), which captures a current time while the biometric data is being captured;
- wherein the data storage unit contains information regarding a permissible period of time;
- wherein the captured biometric data is only stored in the mobile terminal when the current time which is captured during the capturing of the biometric data is located within the permissible period of time.

12. A method for introducing biometric data (BD) of a user (112) into a security document (116), comprising:
- authenticating (702) the user with respect to a server (109) using first authentication data (AD1);
- after successful authentication with respect to the server, using the first authentication data by the server for generating or identifying credentials (C) specifically assigned to the user, wherein the credential authorizes its owner to capture and store the biometric data of the user;
- storing the credential in a mobile terminal (104) according to any one of claims 1 to 11, wherein the mobile terminal comprises at least one sensor (208, 210);
- authenticating the user with respect to the mobile terminal by means of the first authentication data or by means of second authentication data (AD2) of the user;
- authenticating the mobile terminal with respect to the user by means of the stored credential;
- only upon successful reciprocal authentication: automatically or semiautomatically capturing the biometric data (BD) of the user by means of the sensor of the mobile terminal, wherein the capturing of the biometric data includes automatically and/or manually aligning the semi-transparent mirror in such a way that the semi-transparent mirror is positioned between the user and the camera system, comprising:
- automatically testing the authenticity of the captured biometric data by the mobile terminal;
- only if the biometric data was established to be authentic, storing the captured biometric data in the mobile terminal in protected form;
- authenticating an operator (106) by means of third authentication data (AD3) assigned to the operator with respect to the mobile terminal;
- only in the case of a successful authentication of the operator, enabling the readout of the biometric data stored in the mobile terminal for the transmission of the read-out biometric data to the security document; and
- introducing the transmitted biometric data into the security document.

13. The method according to claim 12, wherein the authentication of the user with respect to the mobile terminal comprises:
- carrying out a BAC protocol and/or an EAC protocol and/or a PACE protocol and/or a SAC protocol between the mobile terminal and the further security document (114) and/or
- comparing a data value entered by the user into the mobile terminal and/or read out by the mobile terminal from a further security document (114) of the user with a reference value stored in the mobile terminal.

14. The method according to any one of claims 12 to 13, wherein the further security document (114) has stored biometric reference data of the user (112), wherein the automatic testing of the authenticity of the captured biometric data by the mobile terminal comprises:
- reading out the biometric reference data from the further security document by the mobile terminal;
- comparing the read-out biometric data with the captured biometric data of the user (112);
- if the captured biometric data deviates from the biometric reference data by more than a predefined maximum value, returning a result indicating that the ascertained biometric data is not authentic;
- authenticating the user (112) with respect to the further security document (104) by entering a PIN via a data input interface (220) of the mobile terminal;
- after successful authentication with respect to the further security document, transmitting the security document identifier to the mobile terminal, wherein the security document identifier functions as the second authentication data;
- comparing the transmitted security document identifier with the stored reference value by the mobile terminal to authenticate the user with respect to the mobile terminal.

## Revendications

1. Terminal mobile (104) sous forme d'une valise destiné à la détection de données biométriques (BD) d'un utilisateur (112), comprenant :
- un dispositif de stockage de données (216) qui contient un identifiant (BN) associé de manière spécifique à l'utilisateur, l'identifiant reconnaissant le terminal mobile comme habilité à détecter et à stocker les données biométriques de l'utilisateur ;
- un module d'authentification (304) destiné à l'authentification de l'utilisateur vis-à-vis du terminal mobile au moyen de données d'authentification (AD2) associées à l'utilisateur et destiné à l'authentification du terminal mobile vis-à-vis de l'utilisateur au moyen de l'identifiant (BN) stocké ;
- un capteur (208, 210) destiné à la détection de données biométriques de l'utilisateur, le capteur comprenant un système de caméra (208) ;
- une unité de commande (316), qui est configurée pour détecter de manière automatique ou semi-automatique les données biométriques (BD) de l'utilisateur au moyen du capteur uniquement en cas d'authentification réciproque réussie de l'utilisateur et du terminal mobile ;
- une unité de vérification (308) pour la vérification automatique de l'authenticité des données biométriques détectées ;
- au moins une poignée de transport, une partie de fond (204) et une partie de couvercle (202), le système de caméra (208) étant agencé sur le côté intérieur de la partie de couvercle, la partie de couvercle comprenant un miroir (206) semi-transparent en plus du système de caméra (208) ;
- où l'unité de commande est configurée pour stocker les données biométriques uniquement sous forme protégée dans le dispositif de stockage de données (216) lorsque les données biométriques détectés sont authentiques d'après la vérification ;
- où le module d'authentification (304) est configuré pour l'authentification d'un opérateur (106) vis-à-vis du terminal mobile au moyen d'autres données d'authentification (AD3) qui sont associées à l'opérateur ;
- où l'unité de commande est configurée pour permettre une lecture des données biométriques protégées stockées uniquement dans le cas d'une authentification réussie de l'opérateur afin de transmettre les données biométriques lues vers un document de sécurité (116) ;
- où le miroir semi-transparent peut être orienté automatiquement et/ou manuellement de telle manière que le miroir semi-transparent est positionné entre l'utilisateur et le système de caméra, où le miroir semi-transparent est orienté de telle manière que, sur le côté du miroir semi-transparent orienté vers l'utilisateur, le parcours du rayonnement (414) de la lumière tombant sur le miroir semi-transparent est parallèle au parcours du rayonnement (416) de la partie de cette lumière réfléchie en retour par le miroir semi-transparent ; et
- en outre, doté d'un premier agencement (404) et d'un second agencement (406) de miroirs, le côté (418) du miroir semi-transparent (206) opposé à la personne est agencé de telle manière que la partie (420) de la lumière tombant sur le second agencement de miroirs (406) transmise par le miroir (206) semi-transparent est déviée par le second agencement de miroirs vers le premier agencement de miroirs (404), où le premier agencement de miroirs (404) est disposé de telle manière que cette partie de la lumière transmise déviée sur le premier agencement de miroirs (404) est réfléchie sur le système de caméra (208), où la position d'une entrée de lumière (209) pour le système de caméra (208) est couplée avec la position du miroir semi-transparent.

2. Terminal mobile (104) selon la revendication 1, dans lequel le capteur (208, 210) est constitué :
- d'un système de caméra pour la détection de données d'image d'un visage et/ou d'un iris de l'utilisateur (112) en tant que données biométriques ; ou
- d'un capteur d'empreintes digitales destiné à la détection de données d'empreintes digitales de l'utilisateur en tant que données biométriques ; ou
- d'un capteur destiné au réseau veineux de la main ; ou
- d'un capteur pour l'empreinte de la rétine ; ou
- d'un capteur pour la structure du lit d'ongle ; ou
- d'une signature électronique pad ; ou
- d'un microphone pour la détection d'une empreinte vocale ; ou
- d'une combinaison de deux ou plusieurs desdits capteurs.

3. Terminal mobile (104) selon l'une des revendications précédentes, doté :
- d'un module de contrôle de la qualité (306) destiné au contrôle automatique de la qualité des données biométriques détectées, le stockage des données biométriques n'ayant lieu dans le terminal mobile que si les données biométriques détectées sont conformes aux exigences minimales de qualité prédéfinies.

4. Terminal mobile (104) selon l'une des revendications précédentes,
- dans lequel le capteur comprend un capteur d'empreintes digitales (210) qui est agencé sur le côté intérieur de la partie de fond ; et/ou
- dans lequel la partie de couvercle présente un dispositif d'affichage (226) sur le côté intérieur destinée à l'affichage de preuves d'utilisation pour l'utilisateur pendant la détection des données biométriques.

5. Terminal mobile (104) selon l'une des revendications précédentes, dans lequel le premier agencement de miroirs (404) et/ou le second agencement de miroirs (406) est mobile parallèlement par rapport au parcours de rayonnement (13) de la partie de la lumière transmise à partir du miroir (206) semi-transparent entre le premier agencement de miroirs et le second agencement de miroirs.

6. Terminal mobile (104) selon l'une des revendications précédentes, dans lequel le premier agencement de miroirs (404) et le second agencement de miroirs (406) présentent un premier couplage, le premier couplage étant conçu de telle manière qu'il déplace automatiquement le premier agencement de miroirs (404) lors du déplacement du second agencement de miroirs (406) de sorte que la distance optique entre le second agencement de miroirs (406) et une entrée de lumière (209) du système de caméra (208) reste constante.

7. Terminal mobile (104) selon l'une des revendications précédentes, dans lequel le premier agencement de miroirs (404) peut être déplacé automatiquement pour une position constante du second agencement de miroirs (406) de telle manière que
- la distance optique entre le visage de l'utilisateur (112) et l'entrée de lumière (209) du système de caméra (208) correspond à une valeur prédéfinie, et/ou
- l'agrandissement de l'image du visage et/ou de l'image de l'iris de l'utilisateur détectée par le système de caméra (208) pour la détection des données biométriques (BD) correspond à une valeur prédéfinie.

8. Terminal mobile (104) selon l'une des revendications précédentes, doté en outre d'un dispositif d'éclairage (222) destiné à l'éclairage de l'utilisateur (112), où le dispositif d'éclairage (222) et le premier agencement de miroirs (404) présentent un second couplage, le second couplage étant conçu de sorte qu'il commande automatiquement le comportement de l'éclairage du dispositif d'éclairage (222) lors du déplacement du premier agencement de miroirs (404), le système de caméra et le dispositif d'éclairage (222) étant de préférence des composants de la partie de couvercle (202).

9. Terminal mobile (104) selon l'une des revendications précédentes, doté en outre :
- d'un capteur pour la mesure de la luminosité environnante ; et
- d'une unité d'étalonnage pour le réglage automatique de l'intensité d'éclairage du dispositif d'éclairage et/ou pour le réglage automatique de la sensibilité lumineuse du système de caméra en fonction de la luminosité environnante mesurée.

10. Terminal mobile (104) selon l'une des revendications précédentes, doté en outre :
- d'une unité de localisation (230) qui est configurée pour détecter une position actuelle du terminal mobile pendant la détection des données biométriques ;
- dans lequel le dispositif de stockage de données contient une indication de région géographique ;
- dans lequel le stockage des données biométriques détectées n'a lieu dans le terminal mobile que si, lors de la détection des données biométriques, une position actuelle détectée se trouve à l'intérieur de l'indication de région géographique.

11. Terminal mobile (104) selon l'une des revendications précédentes, doté en outre :
- d'une horloge (232) qui détecte une heure actuelle pendant la détection des données biométriques ;
- dans lequel le dispositif de stockage de données contient une indication d'un intervalle de temps autorisé ;
- dans lequel le stockage des données biométriques détectées dans le terminal mobile n'a lieu que si, lors de la détection des données biométriques, l'heure actuelle détectée se situe dans l'intervalle de temps autorisé.

12. Procédé destiné à enregistrer des données biométriques (BD) d'un utilisateur (112) dans un document de sécurité (116) comprenant :
- l'authentification (702) de l'utilisateur vis-à-vis d'un serveur (109) avec des premières données d'authentification (AD1) ;
- après l'authentification réussie vis-à-vis du serveur, l'utilisation des premières données d'authentification par le serveur pour la génération ou l'identification d'un identifiant (BN) associé de manière spécifique à l'utilisateur, l'identifiant présentant son possesseur comme habilité à détecter et à stocker les données biométriques de l'utilisateur ;
- le stockage de l'identifiant dans un terminal mobile (104) selon l'une des revendications 1 à 11, le terminal mobile comprenant au moins un capteur (208, 210) ;
- l'authentification de l'utilisateur vis-à-vis du terminal mobile au moyen des premières données d'authentification ou au moyen de deuxièmes données d'identification (AD2) de l'utilisateur ;
- l'authentification du terminal mobile vis-à-vis de l'utilisateur au moyen de l'identifiant stocké ;
- uniquement dans le cas d'une authentification réciproque réussie : la détection automatique ou semi-automatique des données biométriques (BD) de l'utilisateur par le capteur du terminal mobile, la détection des données biométriques comprenant une orientation automatique et/ou manuelle du miroir semi-transparent de telle manière que le miroir semi-transparent est positionné entre l'utilisateur et le système de caméra ;
- la vérification automatique de l'authenticité des données biométriques détectées par le terminal mobile ;
- uniquement dans le cas d'une authenticité vérifiée des données biométriques, le stockage des données biométriques détectées dans le terminal mobile sous forme protégée ;
- l'authentification d'un opérateur (106) vis-à-vis du terminal mobile au moyen de troisièmes données d'authentification (AD3) qui sont associées à l'opérateur ;
- uniquement dans le cas d'une authentification réussie de l'opérateur, la possibilité de lecture des données biométriques stockées dans le terminal mobile en vue de la transmission des données biométriques lues au document de sécurité ; et
- l'enregistrement des données biométriques transmises dans le document de sécurité.

13. Procédé selon la revendication 12, dans lequel l'authentification de l'utilisateur vis-à-vis du terminal mobile comprend :
- l'exécution d'un protocole de contrôle d'accès BAC, et/ou d'un protocole EAC, et/ou d'un protocole PACE, et/ou d'un protocole SAC entre le terminal mobile et l'autre document de sécurité (114), et/ou
- la comparaison d'une valeur de données indiquée par l'utilisateur dans le terminal mobile et/ou lue à partir d'un autre document de sécurité (114) par le terminal mobile avec une valeur de référence stockée dans le terminal mobile.

14. Procédé selon l'une des revendications 12 ou 13, dans lequel l'autre document de sécurité (114) a stocké des données de référence biométriques de l'utilisateur (112), la vérification automatique de l'authenticité des données biométriques par le terminal mobile comprenant :
- la lecture des données de référence biométriques de l'autre document de sécurité par le terminal mobile ;
- la comparaison des données de références biométriques lues avec les données biométriques détectées de l'utilisateur (112) ;
- dans le cas où les données biométriques détectées sont différentes des données de référence biométriques de plus d'une valeur maximale prédéfinie, le retour du résultat que les données biométriques déterminées ne sont pas authentiques,
- l'authentification de l'utilisateur (112) vis-à-vis de l'autre document de sécurité (104) par l'indication d'un code PIN par le biais d'une interface d'entrée de données (220) du terminal mobile ;
- après l'authentification réussie vis-à-vis de l'autre document de sécurité, la transmission de l'identificateur de document de sécurité au terminal mobile, l'identificateur de document de sécurité fonctionnant en tant que deuxièmes données d'authentification ;
- la comparaison de l'identificateur de document de sécurité transmis avec la valeur de référence stockée par le terminal mobile pour l'authentification de l'utilisateur vis-à-vis du terminal mobile.
